# EUROPÄISCHE PATENTSCHRIFT

(11) **EP 3 000 696 B1**
(45) Veröffentlichungstag und Bekanntmachung des Hinweises auf die Patenterteilung: **11.04.2018**
(21) Anmeldenummer: 14186446.2
(22) Anmeldetag: 25.09.2014
(51) Int. Cl.: B62D 53/06, B60P 3/11, B60P 3/41, B62D 53/08

(54) **Kupplungsvorrichtung, System mit einer solchen Kupplungsvorrichtung und Verwendung einer solchen Kupplungsvorrichtung**
Coupling device, system with such a coupling device and use of such a coupling device
Dispositif d'accouplement, système doté d'un tel dispositif d'accouplement et utilisation d'un tel dispositif d'accouplement

(43) Veröffentlichungstag der Anmeldung: 30.03.2016
(73) Patentinhaber: F.W. Grundt Logistik + Spedition GmbH & Co. KG, 13509 Berlin (DE)
(72) Erfinder: Schröter, Johannes, 13595 Berlin (DE)
(74) Vertreter: Pfenning, Meinig & Partner mbB

(56) Entgegenhaltungen:
- EP-A1- 0 012 121
- EP-A1- 2 327 655
- EP-A1- 2 594 430
- EP-A1- 2 660 102
- WO-A1-2011/151847
- DE-A1- 3 116 932
- US-A- 4 377 296

## Beschreibung

Die Anmeldung betrifft eine Kupplungsvorrichtung zum Herstellen einer lösbaren Verbindung zwischen einem Fahrzeug und einer Ladeplattform, ein System mit einer solchen Kupplungsvorrichtung und ein Verfahren zum Verwenden einer solchen Kupplungsvorrichtung.

Zum Transportieren von schweren Transportgütern, also allgemein von Transportgütern, die mehr als 5 Tonnen, mehr als 10 Tonnen oder sogar mehr als 100 Tonnen wiegen, werden schwerlasttaugliche (d.h. mit den oben genannten Massen belastbare) Systeme eingesetzt, die insbesondere entsprechend leistungsstarke Fahrzeuge, wie etwa Sattelzugmaschinen und Gabelstapler, und entsprechend schwerlasttaugliche Ladepfattformen, typischerweise mit eigenen Radachsen, wie etwa Rolltrailer und Sattelauflieger, umfassen können. Zum möglichst schnellen und dennoch sicheren Verbinden derartiger Fahrzeuge und Ladeplattformen sind Kupplungsvorrichtungen mit schwerlasttauglichen Kupplungselementen bekannt, wie beispielsweise sogenannte Schwanenhals- bzw. Gooseneck-Kupplungen. Beispielsweise kann die Kupplungsvorrichtung einen schwerlasttauglichen Kupplungsarm, oftmals auch als (Schwanen-)Zunge bezeichnet, aufweisen, der in ein korrespondierendes Kupplungsmaul der Ladeplattform eingeführt wird und/oder in dieses eingreift, um die Ladeplattform zu bewegen und hierzu typischerweise auch (zumindest einseitig) anzuheben. Typischerweise weisen bekannte Kupplungsvorrichtungen außerdem fahrzeugseitige Kupplungselemente auf, die Ausgleichsbewegungen bzw. Drehbewegungen zwischen der Kupplungsvorrichtungen und dem Fahrzeug ermöglichen, wie beispielsweise in den Druckschriften US 3,764,166 B, DE 3116 932 A1 und EP 2594 430 A1 beschrieben. Dennoch ist die Manövrierbarkeit und Flexibilität vieler bekannter Kupplungsvorrichtungen und Systeme weiterhin verbesserungswürdig.

Ein weiteres Beispiel ist in der Druckschrift WO 2001/151847 A1 offenbart, welche einen Gelenkarm zum einseitigen Anheben und Abschleppen eines Fahrzeugs beschreibt. Der Gelenkarm kann zwischen einer ausgezogenen Position, in der der Arm mit dem Fahrzeug verbunden werden kann, und einer zurückgezogenen Ruhestellung bewegt werden. Hierzu umfasst der Gelenkarm einen ersten, einen zweiten und einen dritten Abschnitt, welche gelenkig miteinander verbunden sind.

Es ist somit die Aufgabe der vorliegenden Erfindung, eine Kupplungsvorrichtung der eingangs beschriebenen Art vorzuschlagen, mit der sich Fahrzeuge und Ladeplattformen möglichst einfach und schnell verbinden lassen und die außerdem möglichst gute Manövriereigenschaften aufweist. Außerdem soll ein Transportsystem sowie ein Verfahren zum Transportieren schwerer Transportgüter vorgeschlagen werden, die möglichst einfach sind und möglichst wenig Manövrierraum benötigen.

Diese Aufgabe wird gelöst durch eine Kupplungsvorrichtung gemäß dem Hauptanspruch und durch eine System sowie ein Verfahren gemäß den nebengeordneten Ansprüchen. Weiterentwicklungen und spezielle Ausführungsformen ergeben sich mit den jeweils abhängigen Ansprüchen und der nachfolgenden Beschreibung und den Figuren. Einige der im Folgenden beschriebenen Vorrichtungen, Systeme und Verfahren bilden eigenständige Lösungskonzepte, die für sich genommen und unabhängig von den beanspruchten Gegenständen Vorteile gegenüber dem bekannten Stand der Technik bieten.

Die hier vorgeschlagene Kupplungsvorrichtung zum Herstellen einer lösbaren Verbindung zwischen einem Fahrzeug und einer Ladeplattform geeignet, wobei die Kupplungsvorrichtung ein Kupplungsglied zum Verbinden der Kupplungsvorrichtung mit dem Fahrzeug und einen Kupplungsarm zum Einführen des Kupplungsarms in ein Kupplungsmaul der Ladeplattform umfasst. Die Kupplungsvorrichtung umfasst außerdem ein Zwischenglied, welches zwischen dem Kupplungsglied und dem Kupplungsarm angeordnet ist und diese miteinander verbindet. Wie bereits eingangs ausgeführt worden ist, sind die Kupplungsvorrichtung, also insbesondere das Zwischenglied und der Kupplungsarm, wie auch das Fahrzeug und die Ladeplattform schwerlasttauglich.

Um beispielsweise eine verbesserte Manövrierbarkeit zu erzielen, umfasst die Kupplungsvorrichtung außerdem ein Drehgelenk, welches den Kupplungsarm mit dem Zwischenglied drehbar verbindet. Typischerweise weist das Drehgelenk eine im Wesentlichen vertikal ausgerichtete Drehachse (vertikale Drehachse) auf, um die der Kupplungsarm relativ zum Zwischenglied seitlich schwenkbar ist. Zusätzlich oder alternativ zu der vertikalen Drehachse kann das Drehgelenk eine horizontale Drehachse aufweisen, um die der Kupplungsarm relativ zum Zwischenglied nach oben und unten schwenkbar ist (entsprechend einer Nickbewegung des Kupplungsarms).

Hier und im Folgenden beziehen sich solche Ausdrücke, die sich auf Richtungen, Ausrichtungen und ähnliche räumliche oder geometrische Angaben beziehen, wie beispielsweise "vertikal" und "horizontal", auf den Fall, dass die Kupplungsvorrichtung so ausgerichtet bzw. angeordnet ist, wie es für ihre bestimmungsgemäße Verwendung vorgesehen ist. Der Ausdruck "vertikal" bedeutet also (bei ebenem Untergrund), beispielsweise auf das Fahrzeug bezogen, parallel zur Hochachse des Fahrzeugs oder, alternativ ausgedrückt, senkrecht zur Längsachse des Fahrzeugs und senkrecht zur Querachse des Fahrzeugs. Alternativ oder zusätzlich auf die Ladeplattform bezogen, bedeutet "vertikal" (bei ebenem Untergrund) entsprechend parallel zur Hochachse der Ladeplattform oder, alternativ ausgedrückt, senkrecht zur Längsachse der Ladeplattform und senkrecht zur Querachse der Ladeplattform. Im Fall eines ebenen Untergrunds, auf dem die jeweilige Vorrichtung verwendet wird und auf dem beispielsweise das Fahrzeug und ggf. die Ladeplattform stehen, bedeutet vertikal im Wesentlichen senkrecht zum ebenen Untergrund. Ferner ist mit der Angabe "vorne" immer "dem Fahrzeug zugewandt" bzw. "in Richtung des Fahrzeugs" gemeint und entsprechend mit "hinten" immer "der Ladeplattform zugewandt" bzw. "in Richtung der Ladeplattform".

Entsprechend dem Ausdruck "vertikal" bedeutet (bei bestimmungsgemäßer Verwendung der Kupplungsvorrichtung) der Ausdruck "horizontal", beispielsweise auf das Fahrzeug bezogen, senkrecht zur Hochachse des Fahrzeugs. Typischerweise bedeutet "horizontal" dann auch senkrecht zur Längsachse und/oder parallel zur Querachse des Fahrzeugs. Alternativ oder zusätzlich kann sich die Angabe "horizontal" auch auf die Ladeplattform beziehen, und dann senkrecht zur Hochachse der Ladeplattform bedeuten. Typischerweise bedeutet "horizontal" dann auch senkrecht zur Längsachse und/oder parallel zur Querachse der Ladeplattform. Sofern das Drehgelenk eine vertikale Drehachse aufweist, hat "horizontal" typischerweise die Bedeutung senkrecht zur vertikalen Drehachse des Drehgelenks. Wiederum im Fall eines ebenen Untergrunds bedeutet "horizontal" im Wesentlichen parallel zum ebenen Untergrund.

Sofern sowohl die vertikale Drehachse wie auch die horizontale Drehachse vorhanden sind, sind die Drehachsen relativ zueinander vorzugsweise so angeordnet, dass bei einer Drehung des Kupplungsarms um die vertikale Drehachse die horizontale Drehachse mitgedreht wird, wobei bei einer Drehung des Kupplungsarms um die horizontale Drehachse die Ausrichtung der vertikalen Drehachse vorzugsweise unverändert bleibt. In dieser Ausgestaltung des Drehgelenks ist die horizontale Drehachse zwischen der vertikalen Drehachse und dem Kupplungsarm angeordnet. Prinzipiell ist aber auch die umgekehrte Anordnung möglich, bei der also die vertikale Drehachse zwischen der horizontalen Drehachse und dem Kupplungsarm angeordnet ist. Beispielsweise kann das Drehgelenk als ein Kardangelenk ausgestaltet sein. Beispielsweise kann das Drehgelenk so ausgestaltet sein, dass die horizontale Drehachse und die vertikale Drehachse des Drehgelenks immer senkrecht zueinander ausgerichtet sind.

Die Ausrichtung der vertikalen Drehachse kann, beispielsweise aufgrund von Ausgleichsbewegungen und/oder Lagerspiel, um bis zu 5° oder bis zu 10° von der oben definierten vertikalen Richtung abweichen. Entsprechend kann auch die horizontale Drehachse um bis zu 5° oder bis zu 10° von der oben definierten horizontalen Richtung abweichen.

Beispielsweise ist das Kupplungsglied der Kupplungsvorrichtung, das der Verbindung mit dem Fahrzeug dient, in einem dem Fahrzeug zugewandten vorderen Bereich des Zwischenglieds angeordnet, und ist das Drehgelenk relativ hierzu weiter hinten angeordnet, typischerweise in einem der Ladeplattform zugewandten hinteren Bereich des Zwischenglieds. Typischerweise ist das Zwischenglied derart ausgestaltet, dass der hintere Bereich des Zwischenglieds und das Drehgelenk mit der genannten vertikalen Drehachse sich hinter dem Fahrzeug befinden, in der Regel zwischen dem Fahrzeug und der Ladeplattform. Hierzu kann das Zwischenglied einen (an die Abmessungen des Fahrzeugs angepassten) Träger umfassen, der beispielsweise L-förmig oder Z-förmig ausgestaltet sein kann und dann mindestens einen (im Wesentlichen) horizontal verlaufenden Teilabschnitt und mindestens einen (im Wesentlichen) vertikal verlaufenden Teilabschnitt aufweist, entsprechend der Form bekannter Schwanenhalskupplungen. Die Teilabschnitte können teleskopartig miteinander verbunden sein und ineinander verschiebbar sein zum Verlängern und Verkürzen des Trägers. Auf diese Weise bildet der Träger außerdem ein Schubgelenk der Kupplungsvorrichtung. (Hierzu folgen weiter unten weitere Beispiele und Erläuterungen.) Das Kupplungselement ist in der Regel an einem vorderen (typischerweise horizontal verlaufenden) Endstück des Trägers angeordnet und das Drehgelenk an einem dem Kupplungsarm zugewandten hinteren (typischerweise vertikal verlaufenden) Endstück des Trägers angeordnet.

Der Kupplungsarm weist eine gerade Längsachse auf und erstreckt sich entlang dieser Längsachse von einem dem Drehgelenk zugewandten vorderen Endstück des Kupplungsarms bis zu einem dem Drehgelenk abgewandten hinteren Endstück des Kupplungsarms. Der Kupplungsarm ist so ausgestaltet, dass er mit seinem hinteren Endstück voran in das Kupplungsmaul einer Ladeplattform eingeführt werden kann. Typischerweise verjüngt sich der Kupplungsarm zum hinteren Bereich hin. Typischerweise weist der Kupplungsarm eine im Wesentlichen keilartige und/oder im Wesentlichen trapezoidale Form (mit im Wesentlichen trapezförmiger Oberseite, Unterseite und Seitenflächen des Kupplungsarms) auf. Typischerweise erstreckt sich der Kupplungsarm von dem vorderen Endstück bis zum hinteren Endstück über eine Länge (gemessen entlang der Längsachse des Kupplungsarms)zwischen etwa 0,3 m oder 0,5 m bis etwa 0,8 m oder bis etwa 1 m. Ferner weist der Kupplungsarm typischerweise eine maximale Breite (gemessen entlang einer Querachse des Kupplungsarms) zwischen etwa 10 cm bis etwa 40 cm auf und eine maximale Dicke (gemessen entlang einer Hochachse des Kupplungsarms) zwischen 10 cm bis etwa 40 cm. Typischerweise ist die Länge größer als die Breite und die Breite größer als die Dicke des Kupplungsarms. Das Kupplungsmaul weist hierauf abgestimmte (Innen-)Maße auf.

Beim Einführen des Kupplungsarms in das Kupplungsmaul wird der Kupplungsarm typischerweise im Wesentlichen geradlinig und parallel zu seiner Längsachse in das Kupplungsmaul eingeführt. Das Drehgelenk (bzw. dessen Drehachsen und Gelenkelemente verbleiben außerhalb des Kupplungsmauls, werden also beim Einführen des Kupplungsarms in das Kupplungsmaul nicht in das Kupplungsmaul mit eingeführt. Die Ladeplattform kann anschließend, ggf. nach Herstellung eines Formschlusses bzw. einer Verriegelung zwischen Kupplungsarm und Kupplungsmaul, mittels des Kupplungsarms angehoben werden (zumindest die Vorderseite der Ladeplattform, auf der das Kupplungsmaul angeordnet ist). Hierbei lastet auf dem Kupplungsarm (typischerweise auf einer Oberfläche des Kupplungsarms, die auf einer Oberseite des Kupplungsarms angeordnet ist, und/oder auf den Oberseiten der unten genannten seitlichen Sicherungszapfen des Kupplungsarms) zumindest einen Teil des Gewichts des auf der Ladeplattform befindlichen Transportguts, typischerweise mindestens 10%, mindestens 25% oder sogar mindestens 50% oder mehr des Gewichts des Transportguts. Hierbei wird die Gewichtskraft über das Kupplungsmaul (beispielsweise über eine nach unten weisende Innenfläche des Kupplungsmauls) direkt auf den Kupplungsarm und/oder über die unten genannten Stützarme der Ladeplattform über die Sicherungszapfen auf den Kupplungsarm übertragen. Typischerweise wird der Kupplungsarm innerhalb des Kupplungsmauls fixiert, typischerweise durch einen Formschluss und/oder einen Kraftschluss zwischen dem Kupplungsarm und dem Kupplungsmaul, beispielsweise durch das Anheben der Ladeplattform mittels des Kupplungsarms. Typischerweise stützt sich der Kupplungsarm mit einer auf einer Unterseite des Kupplungsarms angeordneten Oberfläche des Kupplungsarms auf einer nach oben gewandten Oberfläche des Kupplungsmauls ab. Aufgrund dieses hebelartigen Abstützens des Kupplungsarms nach unten mit seinem hinteren Endstück innerhalb des Kupplungsmauls bei gleichzeitigem Anheben der Ladeplattform mit seinem vorderen Endstück (bzw. mit den hieran angeordneten Sicherungszapfen) hat der Kupplungsarm typischerweise die Funktion eines (Last-)Hebels. Im fixierten Zustand sind die Längsachsen des Kupplungsarms und der Ladeplattform zueinander fixiert und typischerweise parallel zueinander (bis ggf. auf geringfügige Ausgleichsbewegungen des Kupplungsarms innerhalb des Kupplungsmauls von weniger als typischerweise 5° oder sogar weniger als 3°). Beim Herausziehen des Kupplungsarms aus dem Kupplungsmaul wird der Kupplungsarm (ggf. nach Lösen des Formschlusses bzw. der Verriegelung) typischerweise im Wesentlichen geradlinig und im Wesentlichen parallel zu seiner Längsachse aus dem Kupplungsmaul herausgezogen.

An Seitenflächen des vorderen Endstück des Kupplungsarms können zwei seitliche Sicherungszapfen angeordnet sein, welche typischerweise senkrecht zur Längsachse und senkrecht zur vertikalen Drehachse ausgerichtet sind und typischerweise nicht in das Kupplungsmaul eingeführt werden. An der Ladeplattform können außerdem zwei Stützarme ausgebildet sein, welche seitlich des Kupplungsmauls angeordnet und typischerweise parallel zur Längsachse der Ladeplattform ausgerichtet sind zum Abstützen auf einer Oberseite jeweils eines der Sicherungszapfen des in das Kupplungsmaul eingeführten Kupplungsarms. Im Fall, dass der Kupplungsarm die genannten Sicherungszapfen aufweist, kann die oben beschriebene Länge des Kupplungsarms auch als Abstand zwischen diesen Sicherungszapfen (gemessen entlang der Längsachse des Kupplungsarms) und dem hinteren Ende des Kupplungsarm definiert sein.

Außerdem grenzt ein erstes Gelenkelement des Drehgelenks typischerweise (von vorne) an das vordere Endstück des Kupplungsarms an und ist mit dem Kupplungsarm verbunden. Entsprechend grenzt typischerweise ein zweites Gelenkelement des Drehelements an das Zwischenglied an und ist mit dem Zwischenglied verbunden ist. Das erste Gelenkelement und das zweite Gelenkelement des Drehgelenks sind dann um die vertikale Drehachse und/oder um die horizontale Drehachse des Drehgelenks relativ zueinander drehbar. Beispielsweise kann es sich bei diesen Gelenkelementen um axial ausgedehnte Zapfen, Achsen oder Wellen bzw. korrespondierend ausgestaltete Lager, insbesondere Radiallager und Axiallager handeln. Werden bei der Verwendung der Kupplungsvorrichtung durch das Drehgelenk, bzw. dessen Gelenkelemente, Haltekräfte, Hebekräfte etc. von der Größenordnung des Gewichts der zu bewegenden schweren Transportgüter aufgenommen, so ist das Drehgelenk bzw. seine Gelenkelemente, ausreichend stabil, d.h. schwerlasttauglich, ausgestaltet, um diesen Belastungen standhalten zu können.

Bei dem genannten "seitlichen" Schwenken um die vertikale Drehachse kann daher ein Winkel zwischen der Längsachse des Kupplungsarms und der Längsachse des Fahrzeugs verkleinert oder vergrößert werden, ohne gleichzeitig die relative Ausrichtung des Zwischenglieds zum Fahrzeug zu verändern. Ist also ein Fahrzeug mittels der Kupplungsvorrichtung mit einer Ladeplattform verbunden, kann sich durch das seitliche Schwenken des Kupplungsarms, welcher in das Kupplungsmaul der Ladeplattform eingeführt ist, auch der Winkel zwischen den der Längsachse der Ladeplattform und des Fahrzeugs ändern, ohne dass sich hierfür das Zwischenglied relativ zum Fahrzeug drehen muss. In vielen Fällen, abhängig von den jeweils vorliegenden räumlichen Bedingungen, kann die Drehbarkeit des Kupplungsarms um die vertikale Drehachse des Drehgelenks die Manövrierbarkeit und Rangierfähigkeit des Fahrzeugs und der Ladeplattform entscheidend verbessern. Es ist prinzipiell auch möglich, dass sich der genannte Winkel zwischen den Längsachsen des Fahrzeugs und der Ladeplattform sowohl durch die Drehbewegung des Kupplungsarms um die vertikale Drehachse des Drehgelenk wie auch durch eine gleichzeitige Drehbewegung des Zwischenglieds relativ zum Fahrzeug ändert (hier dreht sich das Kupplungselement der Kupplungsvorrichtung typischerweise relativ zu einem korrespondierenden Kupplungselement des Fahrzeugs, sofern die Kupplungselemente im verbundenen Zustand relativ zueinander drehbar sind). Durch ein Blockieren der letzteren Drehbewegung kann erreicht werden, dass die Winkeländerung ausschließlich durch die Drehbewegung des Kupplungsarms erfolgt, sofern dies gewünscht ist. Durch ein Blockieren der Drehbewegung des Kupplungsarms kann entsprechend erreicht werden, dass die Winkeländerung ausschließlich durch eine Drehbewegung des Zwischenglieds relativ zum Fahrzeug erfolgt.

In einer Weiterbildung kann die Kupplungsvorrichtung eine hintere Arretiervorrichtung aufweisen, die zum Arretieren des Drehgelenks in einer momentanen Ausrichtung des Kupplungsarms relativ zum Zwischenglied eingerichtet ist. Die hintere Arretiervorrichtung kann eingerichtet sein, Drehungen des Kupplungsarms um die vertikale Drehachse (sofern vorhanden) oder um horizontale Drehachse (sofern vorhanden) oder um beide Drehachsen gleichzeitig oder abwechselnd (sofern beide vorhanden) zu blockieren. Alternativ oder zusätzlich kann die Kupplungsvorrichtung eine vordere Arretiervorrichtung aufweisen, die zum Arretieren des Zwischenglieds in einer momentanen Ausrichtung des Zwischenglieds relativ zum Fahrzeug eingerichtet ist. Die Arretiervorrichtungen können beispielsweise bewegliche (zum Beispiel verschiebbare oder drehbare) Elemente und/oder korrespondierende Aufnahmen oder Konterflächen umfassen. Im Fall der vorderen Arretiervorrichtung kann (auch) das Fahrzeug entsprechende Elemente, Aufnahmen und/oder Konterflächen umfassen. Vorzugsweise ist die vordere Arretiervorrichtung und die hintere Arretiervorrichtung im gegenseitigen Wechsel arretierbar und wieder lösbar, um so abwechselnd das Zwischenglieds relativ zum Fahrzeug und den Kupplungsarm relativ zum Zwischenglied arretieren zu können.

Vorzugsweise ist das Drehgelenk derart ausgebildet, dass der Kupplungsarm um die vertikale Drehachse, sofern vorhanden, jeweils ausgehend von einer Mittenausrichtung des Kupplungsarms, in eine erste Drehrichtung um mindestens 45° oder sogar um 90° und/oder in eine zur ersten Drehrichtung entgegengesetzte zweite Drehrichtung um mindestens 45° oder sogar um 90° schwenkbar ist. In der genannten Mittenausrichtung ist der Kupplungsarm gerade ausgerichtet, typischerweise entlang einer Längsachse des Zwischenglieds bzw. des Fahrzeugs. In der Mittenausrichtung ist das vordere Endstück des Kupplungsarms etwa auf gleicher horizontaler Höhe wie das hintere Endstück des Kupplungsarms. Von dem hinteren Bereich des Zwischenglieds in Richtung des vorderen Bereichs des Zwischenglieds gesehen kann die erste Drehrichtung beispielsweise einem Schwenken des Kupplungsarms zur linken Seite (bzw. zur linken Fahrzeugseite) und die zweite Drehrichtung einem Schwenken zur rechten Seite (bzw. zur rechten Fahrzeugseite) entsprechen. Dann ist der Kupplungsarm um 90° nach links in eine Linksausrichtung des Kupplungsarms und/oder um 90° nach rechts in eine Rechtsausrichtung des Kupplungsarms schwenkbar. Insgesamt ist so ein vertikaler Drehwinkelbereich von 180° erreichbar.

Entsprechend ist im Fall, dass die Kupplungsvorrichtung (alternativ oder zusätzlich zur vertikalen Drehachse) die beschriebene horizontale Drehachse aufweist, das Drehgelenk vorzugsweise derart ausgebildet, dass der Kupplungsarm um die horizontale Drehachse, jeweils ausgehend von der genannten Mittenausrichtung des Kupplungsarms, in eine dritte Drehrichtung um mindestens 45° oder sogar um 90° und/oder in eine zur dritten Drehrichtung entgegengesetzte vierte Drehrichtung um mindestens 45° oder sogar um 90° drehbar ist. Dann kann der Kupplungsarm ausgehend von der Mittenausrichtung ggf. um 90° senkrecht nach oben und/oder um 90° nach unten geschwenkt werden, so dass die Längsachse des Kupplungsarms jeweils vertikal ausgerichtet ist und das hintere Endstück des Kupplungsarms im Wesentlichen senkrecht oberhalb oder senkrecht unterhalb des vorderen Endstücks angeordnet ist. Insgesamt ist so ein horizontaler Drehwinkelbereich von 90° oder sogar von 180° erreichbar.

In einer Ausführungsform der Kupplungsvorrichtung weist das Zwischenglied der Kupplungsvorrichtung zwei Außenträger auf, welche typischerweise parallel zueinander verlaufen. Typischerweise handelt es sich bei den Außenträgern um vertikal verlaufende Teilabschnitte des oben beschriebenen L-förmigen bzw. Z-förmigen Trägers des Zwischenglieds. Die beiden Außenträger sind durch einen im Wesentlichen horizontal verlaufenden Querträger des Zwischenglieds miteinander verbunden. Der Kupplungsarm ist über sein vorderes Endstück an dem Querträger zwischen den beiden Außenträgern mittels einer Aufhängung aufgehängt.

Diese Aufhängung kann als eine drehfeste Verbindung zwischen dem Kupplungsarm und dem Querträger ausgestaltet sein. Typischerweise bilden dann die Aufhängung zusammen mit dem Querträger ein Gelenkelement des Drehgelenks. Typischerweise hat der Querträger dann auch die Funktion einer Welle und ist mit einem entsprechen ausgestalteten Antrieb verbunden, wie weiter unten näher beschrieben wird. Es auch möglich, dass an jedem der beiden Außenträger jeweils ein weiteres Gelenkelelement des Drehgelenks angeordnet ist, wobei diese Gelenkelemente dann als Lagerelemente für den Querträger ausgestaltet sind. Der Querträger ist in den Lagerelementen um eine horizontale Drehachse des Drehgelenks drehbar gelagert.

Es ist auch möglich, dass die Aufhängung als ein Lagerelement für den Querträger ausgestaltet ist, das den Kupplungsarm mit dem Querträger um eine die horizontale Drehachse des Drehgelenks drehbar verbindet. Dann bilden Aufhängung und Querträger jeweils ein Gelenkelement des Drehgelenks.

Das Zwischenglied der Kupplungsvorrichtung kann zusätzlich zu dem Kupplungsarm mindestens ein weiteres Kupplungselement aufweisen, welche zur Herstellung einer lösbaren Verbindung mit mindestens einem korrespondierenden Kupplungselement der Ladeplattform ausgestaltet ist. Bei diesen Kupplungselementen kann es sich beispielsweise um Riegelelemente, Halteelemente, Stützelemente, Aufnahmeelemente, Hakenelemente, Ösenelemente, Bolzenelemente, Laschenelemente und weitere Elemente handeln. Die miteinander korrespondierenden Kupplungselemente sind vorzugsweise derart ausgestaltet, dass sie relativ zueinander in einen (kraftschlüssigen und/oder formschlüssigen) lösbaren gegenseitigen Eingriff oder Zusammenschluss bringbar bzw. bewegbar sind.

Vorzugsweise weist die Kupplungsvorrichtung einen Verriegelungsmechanismus auf, mittels dessen das mindestens eine Kupplungselement der Kupplungsvorrichtung zwischen einer ersten (offenen) Konfiguration (bzw. Ausrichtung) und einer zweiten (verriegelten) Konfiguration (bzw. Ausrichtung) hin und her bewegt werden kann, wobei durch Bewegen des Kupplungselement in die erste Konfiguration (bzw. Ausrichtung) die Verbindung mit dem Kupplungselement der Ladeplattform hergestellt wird und durch das Bewegen zurück in die zweite Konfiguration (bzw. Ausrichtung) wieder gelöst werden kann. Hierzu umfasst der Mechanismus vorzugsweise einen (beispielsweise hydraulischen und/oder elektrischen und/oder mechanischen) Antrieb.

Vorzugsweise befindet sich das mindestens eine weitere Kupplungselement an einer Rückseite des Zwischenglieds. Typischerweise ragt das mindestens eine weitere Kupplungselement im ersten oder im zweiten Zustand freitragend über die Rückseite des Zwischenglieds nach hinten hinaus. Durch Drehen des Kupplungsarms mittels des Drehgelenks, vorzugsweise nach oben oder nach unten um die horizontale Drehachse des Drehgelenks, kann der Kupplungsarm weggeklappt werden. Typischerweise wird der Kupplungsarm hierzu um etwa 90° gedreht ausgehend von der Mittenausrichtung des Kupplungsarms, typischerweise nach oben oder nach unten. Durch dieses Wegklappen kann in manchen Fällen erreicht werden, dass mittels dieser weiteren Kupplungselemente die Verbindung mit der Ladeplattform leichter hergestellt werden kann. Das Wegklappen kann auch, etwa aufgrund der relativen Anordnung des Kupplungsarms und der weiteren Kupplungselemente, in anderen Fällen für die Herstellbarkeit der genannten Verbindung mittels der weiteren Kupplungselemente erforderlich sein.

Mittels der weiteren Kupplungselemente wird die Flexibilität der Kupplungsvorrichtung weiter erhöht, weil nun mittels der Kupplungsvorrichtung nicht nur solche Ladeplattformen, die ein Kupplungsmaul für den Kupplungsarm aufweisen, bewegt werden können, sondern auch Ladeplattformen mit entsprechenden weiteren Kupplungselementen. Weist eine Ladeplattform sowohl ein Kupplungsmaul wie auch entsprechende weitere Kupplungselemente auf, so kann eine lösbare Verbindung gleichzeitig sowohl über den Kupplungsarm und das Kupplungsmaul als auch mittels der weiteren Kupplungselemente hergestellt werden. Hierzu ist selbstverständlich eine entsprechende Abstimmung zwischen der räumlichen Anordnung des Kupplungsarm und der weiteren Kupplungselementen an der Kupplungsvorrichtung einerseits und der räumlichen Anordnung des Kupplungsmauls und der weiteren korrespondieren Kupplungselementen an der Ladeplattform andererseits erforderlich.

Außerdem ist es möglich, eine erste Ladeplattform, die ein (vorzugsweise in Längsrichtung verlängerbares bzw. teleskopierbares) Tiefbett als Ladefläche aufweist, mit einer zweiten Ladeplattform zu beladen, beispielweise mit der hier beschriebenen mobilen Laderampe. Vorzugsweise weist das Tiefbett der ersten Ladeplattform eine maximale Breite auf (gemessen in Richtung der Querachse des Tiefbetts), die geringer ist als ein minimaler Abstand zwischen linken und rechten Rädern der zweiten Ladeplattform (gemessen in Richtung der Querachse der zweiten Ladeplattform). Außerdem ist eine maximale Höhe des Tiefbetts der ersten Ladeplattform kleiner als eine Bodenfreiheit der zweiten Ladeplattform (definiert als der kleinste Abstand zwischen einem ebenen Untergrund, auf dem die zweite Ladeplattform steht, und dem niedrigsten festen Bereich der zweiten Ladeplattform zwischen den linken und rechten Rädern der zweiten Ladeplattform).

Dann kann die zweite Ladeplattform mittels der Kupplungsvorrichtung so über das Tiefbett bewegt (gezogen oder geschoben) werden, dass das Tiefbett der ersten Ladeplattform unter der zweiten Ladeplattform in einem Zwischenraum zwischen den linken und rechten Rädern der zweiten Ladeplattform angeordnet ist. Anschließend kann, ggf. nach einem Absetzten der zweiten Ladeplattform auf dem Tiefbett und ggf. einem Fixieren der zweiten Ladeplattform an der ersten Ladeplattform, die erste Ladeplattform mit der Kupplungsvorrichtung verbunden. Hierzu kann zunächst die Verbindung zwischen der zweiten Ladeplattform und der Kupplungsvorrichtung, welche zuvor beispielsweise mittels des Kupplungsarms der Kupplungsvorrichtung und einem Kupplungsmaul der zweiten Ladeplattform hergestellt worden ist, gelöst werden. Die Verbindung zwischen der Kupplungsvorrichtung und der ersten Ladeplattform kann beispielsweise mittels der oben beschriebenen weiteren Kupplungselemente hergestellt werden, wobei hierfür typischerweise der Kupplungsarm der Kupplungsvorrichtung zunächst weggedreht wird. Prinzipiell ist es möglich, auf die erste Ladeplattform auf diese Weise mit mehreren Ladeplattformen gleichzeitig zu beladen, sofern das Tiefbett hierfür eine ausreichende Länge und Tragkraft aufweist.

Die Kupplungsvorrichtung kann, wie weiter oben schon erwähnt wurde, außerdem ein Schubgelenk umfasst. Dieses ist vorzugsweise ausgebildet, den Kupplungsarm relativ zum Kupplungselement und/oder relativ zum Drehgelenk der Kupplungsvorrichtung entlang mindestens einer Schubachse des Schubgelenks zu verschieben. Typischerweise umfasst das Schubgelenk mindestens zwei entlang der mindestens einen Schubachse verschiebbar gelagerte Gelenkteile. Beispielsweise können die Gelenkteile als (beispielsweise teleskopierbare) Teilabschnitte des Zwischenglieds ausgestaltet sind. Typischerweise ist das mindestens eine Schubgelenk ausgebildet, das Zwischenglied zu verlängern oder zu verkürzen. Zusätzlich oder alternativ hierzu kann das mindestens eine Schubgelenk ausgestaltet sein, einen dem Kupplungselement zugewandten vorderen Teilabschnitt des Zwischenglieds relativ zu einem dem Drehgelenk zugewandten hinteren Teilabschnitt des Zwischenglieds horizontal und/oder vertikal zu verschieben.

Vorzugsweise weist die Kupplungsvorrichtung mindestens einen Antrieb für das Drehgelenk auf. Falls die Kupplungsvorrichtung auch ein Schubgelenk umfasst, dass umfasst sie vorzugsweise außerdem auch einen entsprechenden Antrieb für das das Schubgelenk aufweist. Der jeweilige Antrieb kann ein hydraulisches Getriebe und/oder ein mechanisches Getriebe und/oder ein elektrisches Getriebe umfassen.

Das hier vorgeschlagene System zum Transportieren schwerer Transportgüter umfasst typischerweise mindestens eine Kupplungsvorrichtung hier vorgeschlagener Art, typischerweise eine Vielzahl solcher Kupplungsvorrichtungen. Das System umfasst typischerweise mindestens ein motorisiertes Fahrzeug, wobei das mindestens eine Fahrzeug ein Kupplungselement aufweist, das zum Herstellen einer lösbaren Verbindung mit dem Kupplungsglied der Kupplungsvorrichtung ausgestaltet ist. Typischerweise ist zumindest eines des mindestens einen Fahrzeugs mit einer der mindestens einen Kupplungsvorrichtungen auf die beschriebene Weise verbunden. Typischerweise umfasst das System eine Vielzahl solcher Fahrzeuge. Als derartige Fahrzeuge kommen beispielsweise Zugmaschinen, Flurförderzeuge, wie etwa Schwerlast- und Gabelstapler, RORO-Traktoren, Kräne und Hafenzugmaschinen in Frage. Im Fall der Zugmaschinen können die Kupplungselemente beispielsweise als Sattelplatten ausgestaltet sein, so dass es sich bei den Zugmaschinen dann um sogenannte Sattelzugmaschinen (Sattelschlepper) handelt. Dann können die Kupplungsglieder zumindest mancher der Kupplungsvorrichtungen beispielsweise als mit den Sattelplatten korrespondieren Zapfen ausgestaltet sein, beispielsweise als oder in der Art von Königszapfen. Im Fall der Schwerlast- und Gabelstapler können die Kupplungselemente beispielsweise als Gabelträger oder als Verbindungselemente von Gabelträgern der Schwerlast- und Gabelstapler ausgestaltet sein.

Typischerweise umfasst das System mindestens eine Ladeplattform für schwere Transportgüter. Typischerweise umfasst die mindestens eine Ladeplattform an ihrer Vorderseite, und vorzugsweise auch an ihrer Hinterseite, ein Kupplungsmaul zum Aufnehmen des Kupplungsarms der mindestens einen Kupplungsvorrichtung. Die mindestens eine Ladeplattform des Systems umfasst typischerweise mindestens eine Radachse, um mittels eines Fahrzeugs des Systems gezogen oder geschoben werden zu können. Die Ladeplattform kann aber auch ohne eigene (fest installierte) Radachsen ausgeführt sein. Typischerweise umfasst das System eine Vielzahl derartiger Ladeplattformen. Typischerweise ist zumindest eine der mindestens einen Ladeplattform mit einer der mindestens einen Kupplungsvorrichtungen auf die beschriebene Weise mit einem der Fahrzeuge des Systems verbunden. Als Ladeplattformen kommen beispielsweise Rolltrailer, Sattelauflieger, Container, Container-Pritschen und Containerchassis, Flach- und Tiefbettanhänger, Dolly-Anhänger und mobilen Laderampen in Frage. Vorzugsweise sind die Ladeplattformen jeweils mit (mindestens) einem Kupplungsmaul ausgestattet und weisen vorzugsweise mindestens eine Radachse auf. Insbesondere sind Rolltrailer, Sattelauflieger, Container, Container-Pritschen und Containerchassis, Flach- und Tiefbettanhänger, Dolly-Anhänger und mobilen Laderampen, sofern sie, wie hier vorgeschlagen, mit einem Kupplungsmaul für einen Kupplungsarm einer Kupplungsvorrichtung hier vorgeschlagener Art ausgestattet sind, auch für die Verwendung mit Schwanenhalskupplungen bekannter Art geeignet und somit sehr vielseitig einsetzbar. Jede der genannten Ladeplattformen kann zusätzlich oder alternativ zum mindestens einen Kupplungsmaul ein oder mehrere weitere Kupplungselemente aufweisen, wie beispielsweise eine Bolzenlaschenkupplung, eine Schwerlastöse bzw. ein Schwerlasthake, Twistlockelemente, ein Königszapfe und/oder eine Sattelplatte. Es sind außerdem beliebige Kombinationen mehrerer gleicher oder verschiedener Kupplungselemente möglich, welche an gleichen oder verschiedenen Seiten der Ladeplattform angeordnet sein können, beispielsweise an der Oberseite, an der Unterseite, an der Vorderseite und/oder an der Hinterseite der jeweiligen Ladeplattform.

Im Fall des genannten Dolly-Anhängers weist dieser vorzugsweise eine Sattelplatte mit einer Aufnahme für einen Verbindungszapfen eines Sattelaufliegers auf. Mittels eines solchen Dolly-Anhängers kann beispielsweise einer lösbare Verbindung zwischen dem Kupplungsarm der hier vorgeschlagenen Kupplungsvorrichtung (oder einer anderen Kupplungsvorrichtung mit einem Kupplungsarm) und einem Sattelauflieger über dessen Königszapfen hergestellt werden. Die Sattelplatte des Dolly-Anhängers kann einen Verriegelungsmechanismus aufweisen, mit dem der Königszapfen des Sattelaufliegers in der Aufnahme verriegelt werden kann. Vorzugsweise umfasst der Verriegelungsmechanismus mindestens ein bewegliches Riegelelement, welches zwischen einem geöffneten Zustand und einem verriegelten Zustand bewegt werden kann, wobei der Königszapfen im geöffneten Zustand des Riegelelementes in die Aufnahme eingeführt und aus ihr heraus bewegt werden kann und in dem verriegelten Zustand innerhalb der Aufnahme verriegelt ist.

Vorzugsweise ist der Verriegelungsmechanismus derart ausgestaltet, dass das mindestens eine Riegelelement mittels des in das Kupplungsmaul des Dolly-Anhängers eingeführten Kupplungsarms zwischen dem geöffneten Zustand und dem verriegelten Zustand bewegt werden kann. Beispielsweise kann der Verriegelungsmechanismus im Kupplungsmaul oder an Innenwänden des Kupplungsmauls angeordnete und beweglich gelagerte Elemente aufweisen, welche mit dem mindestens einen Riegelelement verbunden sind und mittels des Kupplungsarms entsprechend betätigt werden können, beispielsweise durch Bewegen des Kupplungsarms, insbesondere durch Drehen um die vertikale Drehachse und/oder um die horizontale Drehachse innerhalb des Kupplungsmauls. Beispielsweise kann ein Drehen des Kupplungsarms innerhalb des Kupplungsmauls nach links (oder nach oben) ein Öffnen und ein Drehen des Kupplungsarms innerhalb des Kupplungsmauls nach rechts (oder nach unten) ein Schließen des Mechanismus bewirken. Als Radachsen (auch als Radsätze bezeichnet) kommen straßentaugliche Radachse wie auch schienentaugliche Radachsen sowie Kombinationen aus straßentauglichen Radachsen und schienentauglichen Radachsen in Frage. Weist eine Ladeplattform sowohl eine straßentaugliche wie auch eine schienentaugliche Radachse auf, so sind diese vorzugsweise relativ zueinander höhenverstellbar, beispielsweise mittels eines (typischerweise hydraulischen) Antriebs, so dass die Ladeplattform wahlweise auf einer Straße (bzw. einem straßenähnlichen Untergrund) oder auf Schienen fahrbar ist.

Das System kann mindestens einen schienengebundenen Güterwagen umfassen, insbesondere einen Flachwagen. Vorzugsweise sind auf einer Ladefläche des Güterwagens Schienen für den mindestens einen schienentauglichen Radsatz (Radachse) der oben genannten Ladeplattform angeordnet, wobei die Schienen einen parallel zur Längsachse des Güterwagens verlaufenden ersten Abschnitt und mindestens einen sich hieran anschließenden und in Richtung eines Seitenrandes der Ladefläche des Güterwagens abbiegenden zweiten Abschnitt aufweisen, wobei dieser zweite Abschnitt sich vorzugsweise bis zum Seitenrand fortsetzt. Die oben genannte mobile Laderampe kann ebenfalls eine Ladefläche mit Schienen aufweisen. Beispielsweise kann die Ladeplattform mittels eines Fahrzeugs, das über eine Kupplungsvorrichtung mit der Ladeplattform verbunden ist, auf die Ladefläche der Rampe und/oder des Güterwagens geschoben werden. Wird die Ladeplattform entlang der Schienen ausgerichtet und die schienentaugliche Radsatz über den Schienen ausgefahren, wird die Ladeplattform beim Verschieben mittels der Schienen gelenkt, so dass das Rangieren der Ladeplattform auf der Laderampe und/oder dem Güterwagen vereinfacht wird und die Ladeplattform sehr schnell und zielgenau auf dem Güterwagen verladen und platziert werden kann. Weist die Laderampe ebenfalls Schienen auf, so verlaufen sie in Richtung eines Seitenrandes der Ladefläche der Laderampe und setzen sich vorzugsweise bis zum Seitenrand fortsetzt. Vorzugsweise wird die Laderampe relativ zum Güterwagen so ausgerichtet, dass die Schienen der Laderampe direkt an die Schienen des Güterwagens anschließen und die Ladeplattform entlang der Schienen der Laderampe auf die Schienen des Güterwagens geschoben werden kann bzw. in umgekehrter Richtung, also beim Entladen des Güterwagens, die Ladeplattform entlang der Schienen des Güterwagens auf die Schienen der Laderampe geschoben werden kann.

Hier vorgeschlagen wird außerdem ein Kupplungsadapter, der von dem hier vorgeschlagenen System umfasst sein kann. Der Kupplungsadapter kann prinzipiell zusammen mit wie auch unabhängig von der hier vorgeschlagenen Kupplungsvorrichtung verwendet werden. Der Kupplungsadapter ist ausgestaltet zum Herstellen einer lösbaren Verbindung zwischen dem Kupplungsarm der hier vorgeschlagenen Kupplungsvorrichtung (oder einer anderen Kupplungsvorrichtung mit einem Kupplungsarm) und einem Sattelauflieger (mit oder ohne Kupplungsmaul). Der Kupplungsadapter umfasst ein Basisteil, das auf einer Vorderseite des Basisteils ein Kupplungsmaul zum Aufnehmen des Kupplungsarms der Kupplungsvorrichtung aufweist. Auf einer Oberseite des Basisteils ist eine Sattelplatte mit einer Aufnahme für einen Verbindungszapfen des Sattelauflegers angeordnet. Dieser Kupplungsadapter entspricht im Aufbau dem oben beschriebenen Dolly-Anhänger mit dem wesentlichen Unterschied, dass dieser Kupplungsadapter keine eigenen Radachsen aufweist. Der vorgeschlagene Kupplungsadapter wird daher im Vergleich zum Dolly-Anhänger typischerweise für etwas geringere Lasten eingesetzt. Insbesondere kann auch die Sattelplatte des Kupplungsadapters den oben im Zusammenhang mit dem Dolly-Anhänger beschriebenen Verriegelungsmechanismus aufweisen. Zusätzlich oder alternativ zur genannten Sattelplatte kann der Kupplungsadapter auch mindestens ein anderes/weiteres Kupplungselement aufweisen, wie weiter unten ausführlicher beschrieben ist.

Außerdem kann das Basisteil des Kupplungsadapters mindestens einen Bolzen aufweisen, der beispielsweise an einem auf der Vorderseite des Basisteils angeordneten (und vorzugsweise plattenförmig ausgestalteten) Träger angeordnet sein kann, wobei der mindestens eine Bolzen vorzugsweise nach hinten, also in Richtung der Sattelplatte, ausgerichtet ist. Der Sattelauflieger kann mindestens eine auf der Vorderseite des Sattelaufliegers angeordnete Aufnahme für den mindestens einen Bolzen aufweisen. Dann ist es beispielsweise möglich, zum Verbinden des Kupplungsadapters mit dem Sattelauflieger den Kupplungsadapter zunächst mit einem Kupplungsarm einer Kupplungsvorrichtung hier vorgeschlagener Art aufzunehmen und so relativ zum Sattelauflieger zu bewegen, dass der mindestens eine Bolzen des Kupplungsadapters in die zugehörige mindestens eine Aufnahme des Sattelaufliegers eingeführt wird und auch der Königszapfens des Sattelaufliegers in die Aufnahme der Sattelplatte eingeführt wird. Anschließend kann ggf. durch Betätigen des Verriegelungsmechanismus der Sattelplatte der Königszapfen in der Sattelplatte verriegelt werden.

Zur Verbesserung der Flexibilität und Kompatibilität des Systems kann das System mindestens einen Kupplungsadapter der in der Veröffentlichung EP 2357122 A1 beschriebenen Art umfassen wie auch Weiterentwicklungen dieses Kupplungsadapters sowie Weiterentwicklungen des oben vorgeschlagenen Kupplungsadapters. Diese Weiterentwicklungen werden im Folgenden beschrieben. Ein Kupplungsadapter kann, wie in EP 2357122 A1 beschreiben ist, einen Kupplungsarm (oder ein Kupplungsmaul) und ein Basiselement (auch als Basisteil bezeichnet) aufweisen, welche in ihrer Funktion und typischerweise auch in ihrer Ausgestaltung dem Kupplungsarm bzw. dem Zwischenglied der hier vorgeschlagenen Kupplungsvorrichtung entsprechen. In einer Weiterentwicklung eines Kupplungsadapters ist es möglich, dass der Kupplungsadapter mindestens ein Drehgelenk umfasst, welches mindestens einen Kupplungsarm des Kupplungsadapters mit dem Basiselement des Kupplungsadapters drehbar verbindet, entsprechend der hier vorgeschlagenen Kupplungsvorrichtung. Das Drehgelenk des Kupplungsadapters kann ein jedes der Merkmale des Drehgelenks der hier vorgeschlagenen Kupplungsvorrichtung aufweisen, insbesondere also die beschriebene horizontale/vertikale Drehachse und Gelenkelemente.

Ebenso können jeweils auch das Basiselement und der mindestens eine Kupplungsarm (sofern vorhanden) des Kupplungsadapters ein jedes der Merkmale des Zwischenglieds bzw. des Kupplungsarms der hier vorgeschlagenen Kupplungsvorrichtung aufweisen. Wie außerdem in EP 2357122 A1 beschreiben ist, kann das Basiselement des Kupplungsadapters mindestens ein weiteres Kupplungselement aufweisen, wie beispielsweise ein Kupplungsmaul und/oder einen Kupplungsarm und/oder eine Bolzenlaschenkupplung und/oder eine Schwerlastöse bzw. ein Schwerlasthaken und/oder ein Twistlockelement. Zusätzlich oder alternativ zu diesen Kupplungselementen sind weitere bzw. andere Kupplungselemente möglich, wie beispielsweise ein Königszapfen oder eine Sattelplatte. Entsprechend kann auch das Kupplungsglied der hier vorgeschlagenen Kupplungsvorrichtung als Kupplungsmaul, als Bolzenlaschenkupplung, als Schwerlastöse bzw. Schwerlasthaken, ein Twistlockelement, als Königszapfen oder als Sattelplatte ausgestaltet sein.

Es sind außerdem beliebige Kombinationen mehrerer gleicher oder verschiedener Kupplungselemente möglich, welche an gleichen oder verschiedenen Seiten des Basiselements des Kupplungsadapters bzw. des Zwischenglieds der Kupplungsvorrichtung angeordnet sein können, beispielsweise an der Oberseite, an der Unterseite, an der Vorderseite und/oder an der Hinterseite des Basiselements bzw. des Zwischenglieds. Entsprechend sind der mindestens eine Kupplungsarm (sofern vorhanden) und das mindestens eine weitere Kupplungselement vorzugsweise an verschiedenen Seiten oder an gleichen Seiten des Basiselements bzw. des Zwischenglieds angeordnet. Im Fall der Schwerlastöse bzw. des Schwerlasthakens sind diese vorzugsweise an einer Oberseite des Basiselements bzw. der Kupplungsvorrichtung angeordnet, wie in Figur 11 der EP 2357122 A1 gezeigt ist.

Im Fall einer Schwerlastöse bzw. eines Schwerlasthakens, vgl. Figur 11 aus EP 2357122 A1, kann das Basiselement bzw. das Zwischenglied ein Element mit einem Zusatzgewicht aufweisen, welches zur Stabilisierung des Kupplungsarms in einer bevorzugten (z.B. horizontalen) Mittenausrichtung ausgestaltet und angeordnet ist. Außerdem kann an der Unterseite des Basiselements des Kupplungsadapters bzw. an der Unterseite des Zwischenglieds der Kupplungsvorrichtung eine oder mehrere Räder oder Radachsen (schienen- oder stra-ßentauglich) angeordnet sein, beispielsweise um einen Teil des Gewichts der Ladeplattform über die Räder oder Radachsen aufzunehmen und rollfähig abzustützen, so dass die Ladeplattform über diese Räder bzw. Radachsen rollend bewegt werden kann.

Bei der hier vorgeschlagenen Verwendung einer Kupplungsvorrichtung hier vorgeschlagener Art sowie eines Systems hier vorgeschlagener Art wird eine Ladeplattform mittels der Kupplungsvorrichtung bewegt, beispielsweise durch ein Fahrzeug, das mittels der Kupplungsvorrichtung mit der Ladeplattform verbunden ist, beispielsweise durch Fahren des Fahrzeugs und/oder durch Anheben oder Absenken der Kupplungsvorrichtung mittels des Fahrzeugs. Gleichzeitig kann der Kupplungsarm der Kupplungsvorrichtung um die, sofern vorhanden, vertikale Drehachse des Drehgelenks der Kupplungsvorrichtung seitlich geschwenkt werden, wobei sich eine relative Ausrichtung einer Längsachse des Fahrzeugs zur Längsachse der Ladeplattform durch das Schwenken des Kupplungsarms ändern kann. Sofern die Kupplungsvorrichtung alternativ oder zusätzlich zur vertikalen Drehachse die genannte horizontale Drehachse aufweist, kann, beispielsweise beim Bewegen der Ladeplattform, der Kupplungsarm der Kupplungsvorrichtung (auch) um die horizontale Drehachse des Drehgelenks der Kupplungsvorrichtung nach oben und unten gedreht werden. Beispielsweise sind durch Drehungen des Kupplungsarms um die horizontale Drehachse Ausgleichsbewegungen beim Anheben bzw. Absenken des Kupplungsarms bzw. der Kupplungsvorrichtung mittels des Fahrzeugs oder auch beim Befahren eines unebenen Untergrunds, beispielsweise einer Rampe, möglich. Außerdem ist es durch entsprechend weites Anheben der Kupplungsvorrichtung bzw. des Kupplungsarms und gleichzeitiges nach unten Drehen des Kupplungsarms um die horizontale Drehachse des Drehgelenks möglich, die hiermit verbunden Ladeplattform einseitig (auf der Seite des Kupplungsmauls) anzuheben. Beispielsweise kann zum Anheben des Kupplungsarms die gesamte Kupplungsvorrichtung mittels des Fahrzeugs angehoben werden, beispielsweise wenn es sich bei dem Fahrzeug um einen Kran, einen Schwerlast- oder Gabelstapler oder einen Sattelschlepper mit (hydraulisch) anhebbarer und/oder absenkbarer Sattelplatte handelt. Es ist aber prinzipiell auch möglich, dass der Kupplungsarm durch ein entsprechend ausgebildetes Schubgelenk der Kupplungsvorrichtung angehoben oder abgesenkt wird.

So ist es beispielsweise möglich, insbesondere wenn es sich bei dem Transportgut um Schüttgut handelt, durch ausreichend starkes Kippen der Ladeplattform diese zu entladen, indem das Transportgut aufgrund eines ausreichend starken Kippwinkels von der Ladeplattform gleitet oder rutscht bzw. geschüttet wird. Es ist prinzipiell auch möglich, die Ladeplattform bis zur Senkrechten zu kippen und sie beispielsweise senkrecht aufzustellen (die Längsachse der Ladeplattform ist dann vertikal ausgerichtet und das Kupplungsmaul weist nach oben). Auf diese Weise können mehrere Ladeplattformen platzsparend nebeneinander senkrecht aufgestellt und in dieser Aufstellung ggf. gelagert oder weitertransportiert werden, beispielsweise per Schiff oder einem schienengebundenen Güterwaggon.

Es kann vorgesehen sein, dass während des Bewegens der Ladeplattform mittels des Kupplungsglieds, beispielsweise beim Fahren des Fahrzeugs, das Zwischenglied der Kupplungsvorrichtung mittels einer Arretierungsvorrichtung des Kupplungsglieds und/oder des Fahrzeugs, beispielsweise mittels der oben genannten vorderen Arretiervorrichtung, relativ zum Fahrzeug drehfest arretiert ist zum Blockieren von Drehbewegungen des Kupplungsglieds relativ zum Fahrzeug. Außerdem kann, vorzugsweise im Wechsel zum Blockieren der Drehbewegungen des Kupplungsglieds relativ zum Fahrzeug, während des Bewegens der Ladeplattform beim Fahren des Fahrzeugs das Zwischenglied der Kupplungsvorrichtung mittels einer Arretierungsvorrichtung des Kupplungsglieds und/oder des Fahrzeugs, beispielsweise mittels der oben genannten vorderen Arretiervorrichtung, relativ zum Fahrzeug drehfest arretiert ist zum Blockieren von Drehbewegungen des Kupplungsglieds relativ zum Fahrzeug.

Außerdem kann vor dem Einführen des Kupplungsarms in das Kupplungsmaul der Ladeplattform und/oder nach dem Herausziehen des Kupplungsarms aus dem Kupplungsmaul der Kupplungsarm mittels des Drehgelenks gedreht werden. So ist es beispielsweise möglich, dass sich der Kupplungsarm beim Einführen des Kupplungsarms in das Kupplungsmaul und/oder beim Herausziehen des Kupplungsarms aus dem Kupplungsmaul in einer (z.B. relativ zur Mittenausrichtung) geschwenkten Ausrichtung befindet. Kann sich der Kupplungsarm, wie oben beschrieben, in der Linksausrichtung, in der Rechtsausrichtung befinden oder senkrecht nach oben oder unten weisen, oder sich in einer Zwischenstellung mit einem geringeren Drehwinkel (kleiner als 90°) befinden. Besonders im Fall einer geschwenkten Ausrichtung des Kupplungsarms ist es möglich, dass der Kupplungsarm mittels eines Schubgelenks des Zwischenglieds entlang der Längsachse des Kupplungsarms verschoben wird und der Kupplungsarm durch dieses Verschieben in das Kupplungsmaul der Ladeplattform eingeführt oder aus dem Kupplungsmaul der Ladeplattform herausgezogen wird.

Im Folgenden wird die Erfindung anhand in Figuren 1 bis 28 schematisch dargestellter konkreter Ausführungsbeispiele näher erläutert. Es zeigt:
- Fig. 1: eine Seitenansicht einer Kupplungsvorrichtung hier vorgeschlagener Art, die ein Fahrzeug mit einer Ladeplattform verbindet,
- Fig. 2: eine Vorderansicht der in Fig. 1 gezeigten Ladeplattform,
- Fig. 3A: eine Seitenansicht der in Fig. 1 gezeigten Kupplungsvorrichtung,
- Fig. 3B: eine Seitenansicht einer Weiterentwicklung der in Fig. 3 gezeigten Kupplungsvorrichtung,
- Fig. 4A: eine Ansicht von oben auf die Fig. 3A gezeigte Kupplungsvorrichtung,
- Fig. 4B: eine Ansicht von oben auf die Fig. 3B gezeigte Kupplungsvorrichtung,
- Fig. 5A: eine Ansicht auf einen Querschnitt durch die in Fig. 4A gezeigte Kupplungsvorrichtung entlang der in Fig. 4A mit VA gekennzeichneten Schnittebene,
- Fig. 5B: eine Ansicht auf einen Querschnitt durch die in Fig.4B gezeigte Kupplungsvorrichtung entlang der in Fig. 4B mit VB gekennzeichneten Schnittebene,
- Fig. 6: eine Seitenansicht einer weiteren Kupplungsvorrichtung hier vorgeschlagener Art, die ein Fahrzeug mit einer Ladeplattform verbindet,
- Fig. 7: eine Ansicht von oben auf die Kupplungsvorrichtung, das Fahrzeug und die Ladeplattform aus der Fig. 6,
- Fig. 8: eine Seitenansicht der in Fig. 7 gezeigten Kupplungsvorrichtung,
- Fig. 9: eine Ansicht von oben auf die Fig. 8 gezeigte Kupplungsvorrichtung,
- Fig. 10A: eine Ansicht von oben auf eine Beladung oder Entladung eines Güterwaggons mit einer Ladeplattform über eine mobile Ladeplattform, wobei ein Fahrzeug mit einer Kupplungsvorrichtung hier vorgeschlagener Art mit der Ladeplattform verbunden ist, wobei die Ladeplattform mittels des Fahrzeugs über eine mobile Laderampe auf einen Güterwaggon geschoben wird,
- Fig. 10B: eine Ansicht von oben auf Weiterentwicklungen des in Fig. 10A gezeigten Güterwaggon und der mobilen Laderampe, welche mit Schienen ausgestattet sind,
- Fign. 11-12: weitere Ansichten von oben auf die Beladung bzw. Entladung aus Fig. 10A, in zwei weiteren Stadien,
- Fig. 13-14: wie in Fign. 11-12, mit einer alternativen Ausführungsform der Kupplungsvorrichtung,
- Fig. 15: die in Fign. 10B gezeigte Anordnung in einer Seitenansicht,
- Fig. 16: eine Seitenansicht auf eine als Rolltrailer ausgestaltete Ladeplattform,
- Fig. 17: eine Seitenansicht auf eine Kupplungsvorrichtung hier vorgeschlagener Art, die über einen Dolly-Anhänger hier vorgeschlagener Art mit einem Sattelauflieger verbunden ist,
- Fig. 18A: eine Seitenansicht auf eine Kupplungsvorrichtung hier vorgeschlagener Art, die über einen Kupplungsadapter hier vorgeschlagener Art mit einem Sattelauflieger verbunden ist,
- Figur 18B: eine Ansicht von vorne auf den in Figur 18A gezeigten Kupplungsadapter,
- Figur 18C: eine Ansicht von oben auf den in Figur 18A gezeigten Kupplungsadapter.
- Fig. 19: eine Ansicht von oben auf zwei Fahrzeuge, die jeweils über eine Kupplungsvorrichtung hier vorgeschlagener Art und einen Kupplungsadapter hier vorgeschlagener Art mit einer Ladeplattform verbunden sind und diese auf einen Güterwaggon heben und absetzen,
- Fig. 20: eine Seitenansicht auf einen der in Figur 19 gezeigten Kupplungsadapter mit einer Kupplungsvorrichtung hier vorgeschlagener Art,
- Fig. 21: eine Ansicht von oben auf einen der in Figur 19 gezeigten Kupplungsadapter mit einer Kupplungsvorrichtung hier vorgeschlagener Art,
- Fig. 22: eine Seitenansicht zweier Fahrzeuge, die jeweils über eine Kupplungsvorrichtung hier vorgeschlagener Art und einen Kupplungsadapter hier vorgeschlagener Art mit einer Ladeplattform verbunden sind,
- Fig. 23: eine Kupplungsvorrichtung hier vorgeschlagener Art in einer Ansicht von oben,
- Fig. 24: eine Seitenansicht der in Fig. 23 gezeigten Kupplungsvorrichtung,
- Fig. 25: eine Ansicht von hinten auf die in Figur 23 gezeigte Kupplungsvorrichtung
- Fig. 26: eine Seitenansicht einer zweiten Ladeplattform, die mittels der in Figur 23 gezeigten Kupplungsvorrichtung auf ein Tiefbett einer ersten Ladeplattform verladen wird,
- Fig. 27: eine Seitenansicht der in Figur 26 gezeigten ersten Ladeplattform, auf der die zweite Ladeplattform verladen ist und die mit der Kupplungsvorrichtung verbunden ist,
- Fig. 28: eine Ansicht von vorne auf die erste Ladeplattform und die zweite Ladeplattform aus Figur 26.

In den Figuren werden für gleiche oder einander entsprechende Merkmale jeweils die gleichen Bezugszeichen verwendet, siehe Bezugszeichenliste am Ende der Beschreibung.

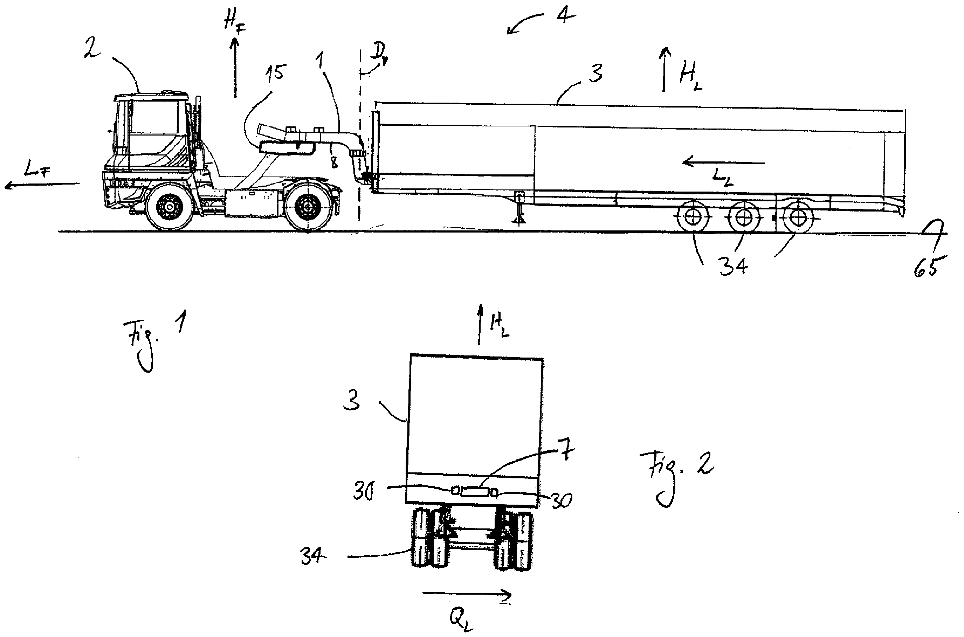

Figur 1 zeigt eine Seitenansicht einer Kupplungsvorrichtung 1 hier vorgeschlagener Art, die ein als Sattelschlepper ausgebildetes Fahrzeug 2 mit einer als Sattellauflieger ausgestaltete Ladeplattform 3 verbindet. Die Kupplungsvorrichtung 1, das Fahrzeug 2 und die Ladeplattform 3 bilden ein System 4 hier vorgeschlagener Art, können aber genau so gut auch Teil eines solchen Systems sein.

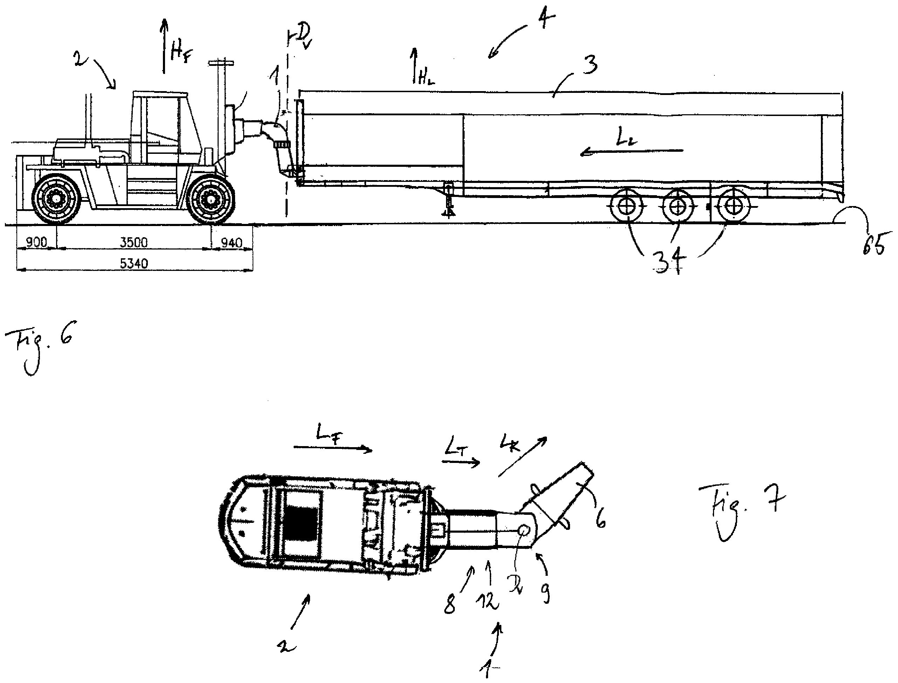

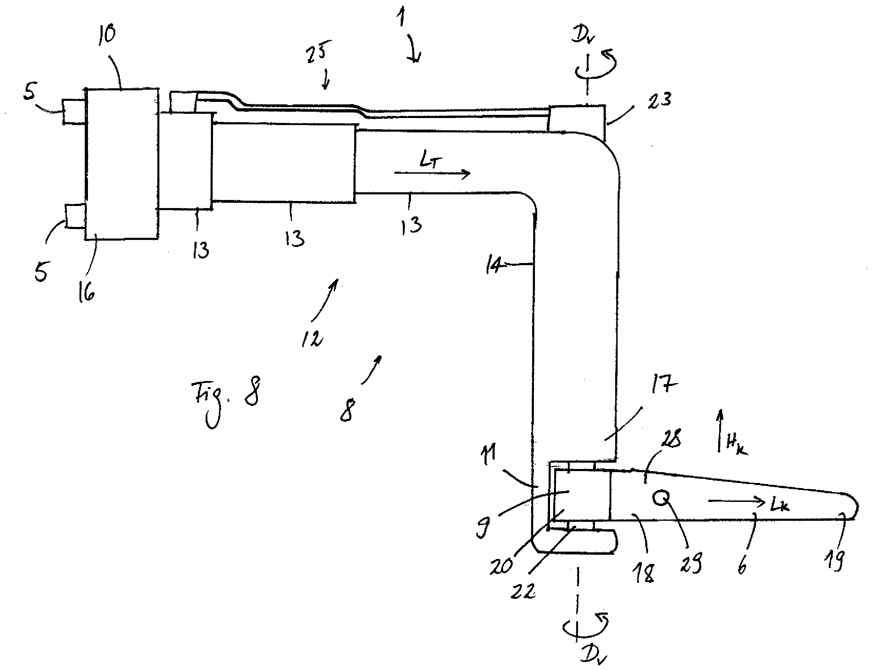

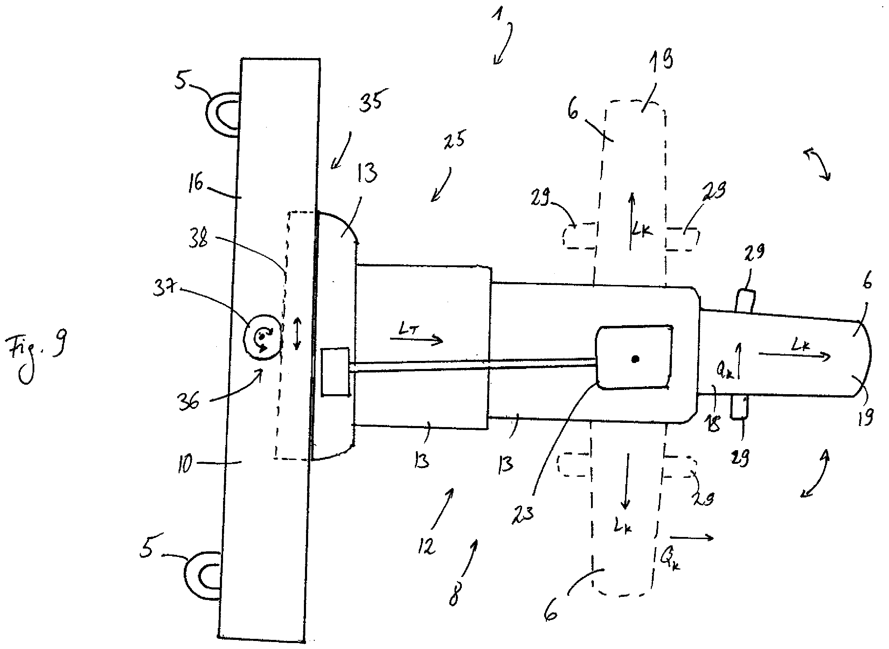

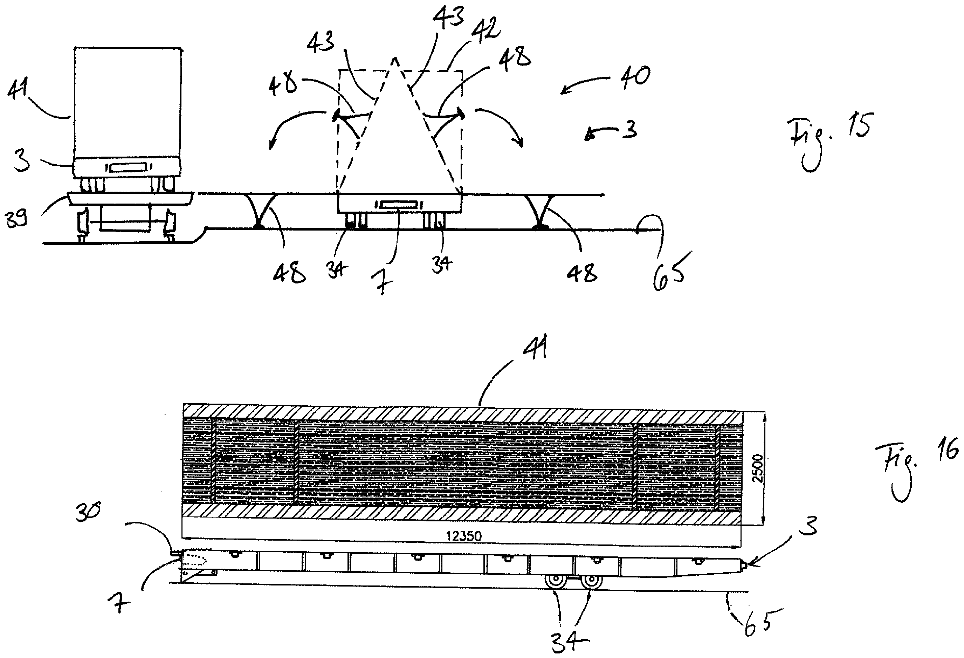

Bei dem Fahrzeug 2 könnte es sich aber auch beispielsweise um ein Flurförderzeug, wie etwa ein Schwerlast- oder Gabelstapler handeln, wie in Figuren 6 und 7 gezeigt ist, oder um einen RORO-Traktor oder eine Hafenzugmaschinen, ggf. mit entsprechenden Anpassungen der Ausgestaltung der Kupplungsvorrichtung 1, siehe beispielweise Figuren 8 und 9. Bei der Ladeplattform 3 könnte es sich beispielsweise auch um einen Rolltrailer, ein Containerchassis, einen Flach- bzw. Tiefbettanhänger, eine mobile Laderampe oder einen Dolly-Anhänger handeln, siehe auch Figuren 15 bis 18.

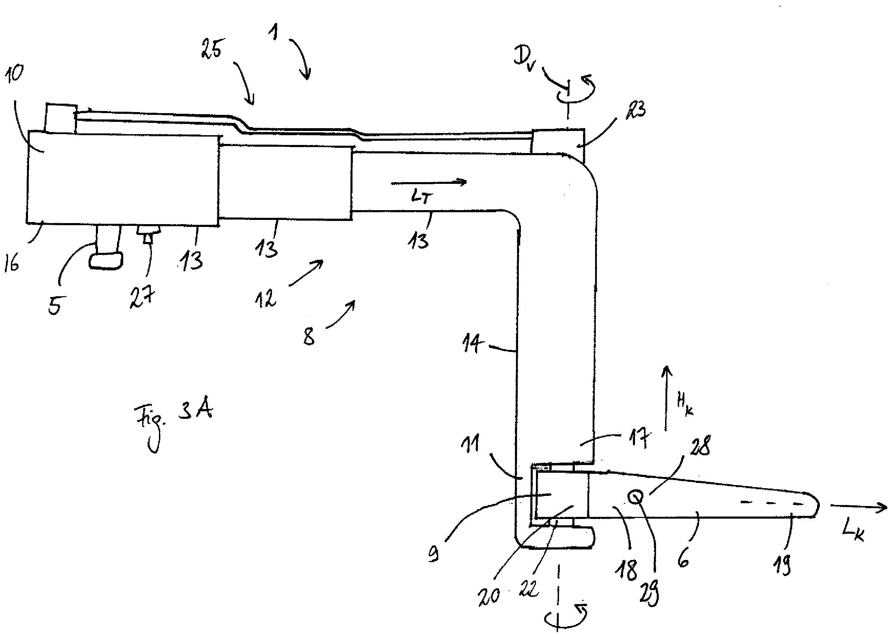

In Figur 2 ist eine Vorderansicht der in Figur. 1 gezeigten Ladeplattform 3 gezeigt. In Figuren 3A, 4A und 5A sind eine Seitenansicht, eine Ansicht von oben bzw. ein Querschnitt der Kupplungsvorrichtung 1 gezeigt. In Figur 3A ist zu erkennen, dass die Kupplungsvorrichtung 1 ein zapfenförmiges Kupplungsglied 5 aufweist zum Herstellen einer lösbaren und drehfähigen Verbindung mit einem korrespondierenden Kupplungselement 15 des Fahrzeugs 2. In dem in Figur 1 gezeigten Beispiel handelt es sich bei dem Fahrzeug um einen Sattelschlepper, bei dem das Kupplungselement 15 als eine hydraulisch heb- und absenkbare Sattelplatte ausgestaltet ist. Die Kupplungsvorrichtung 1 umfasst außerdem einen Kupplungsarm 6, der in ein Kupplungsmaul 7 der Ladeplattform 3, siehe Figur 2, eingeführt werden kann. Die Kupplungsvorrichtung 1 umfasst außerdem ein Zwischenglied 8, welches zwischen dem Kupplungsglied 8 und dem Kupplungsarm 6 angeordnet ist und diese miteinander verbindet.

Wie in Figur 3A außerdem zu erkennen ist, umfasst die Kupplungsvorrichtung 1 außerdem ein Drehgelenk 9, welches den Kupplungsarm 6 mit dem Zwischenglied 8 drehbar verbindet. Das Drehgelenk 9 weist eine im Wesentlichen vertikal ausgerichtete Drehachse Dᵥ auf, um die der Kupplungsarm 6 relativ zum Zwischenglied 8 seitlich schwenkbar ist. In dem in Figur 1 gezeigten Fall eines ebenen Untergrunds, auf dem das Fahrzeug 1 und die Ladeplattform 3 stehen, ist die vertikal ausgerichtete Drehachse Dᵥ parallel zur H_{F} Hochachse des Fahrzeugs 2 und parallel zur Hochachse H_{L} der Ladeplattform.

Das Kupplungsglied 5 der Kupplungsvorrichtung 1 ist in einem dem Fahrzeug zugewandten vorderen Bereich 10 des Zwischenglieds 8 angeordnet. Das Drehgelenk 9 ist relativ hierzu weiter hinten angeordnet in einem der Ladeplattform 3 zugewandten hinteren Bereich 11 des Zwischenglieds 8. Wie in Figur 1 besonders gut zu erkennen ist, ist das Zwischenglied 8 derart ausgestaltet, dass sich der hintere Bereich 11 des Zwischenglieds 8 und das Drehgelenk 9 mit der vertikalen Drehachse Dᵥ hinter dem Fahrzeug 2 bzw. zwischen dem Fahrzeug 2 und der Ladeplattform 3 befinden. Hierzu weist das Zwischenglied 8 einen an die Abmessungen des Fahrzeugs angepassten Träger 12 auf, der in diesem Beispielsweise L-förmig ausgestaltet ist und mindestens einen, in diesem Fall mehrere, im Wesentlichen horizontal verlaufenden Teilabschnitte 13 und einen im Wesentlichen vertikal verlaufenden Teilabschnitt 14 aufweist, entsprechend der Form bekannter Schwanenhalskupplungen. Die horizontal verlaufenden Teilabschnitte 13 sind in diesem Beispiel teleskopartig miteinander verbunden und ineinander verschiebbar sein zum Verlängern und Verkürzen des Trägers 12 entlang einer horizontalen Längsache L_{T} des Trägers 12, so dass auf diese Weise ein Schubgelenk 25 der Kupplungsvorrichtung 1 ausgebildet ist.

Das Kupplungsglied 8 ist in an einem vorderen, horizontal verlaufenden Endstück des Trägers 12 angeordnet und das Drehgelenk 9 an einem dem Kupplungsarm 6 zugewandten hinteren, vertikal verlaufenden Endstück 17 des Trägers 12 angeordnet.

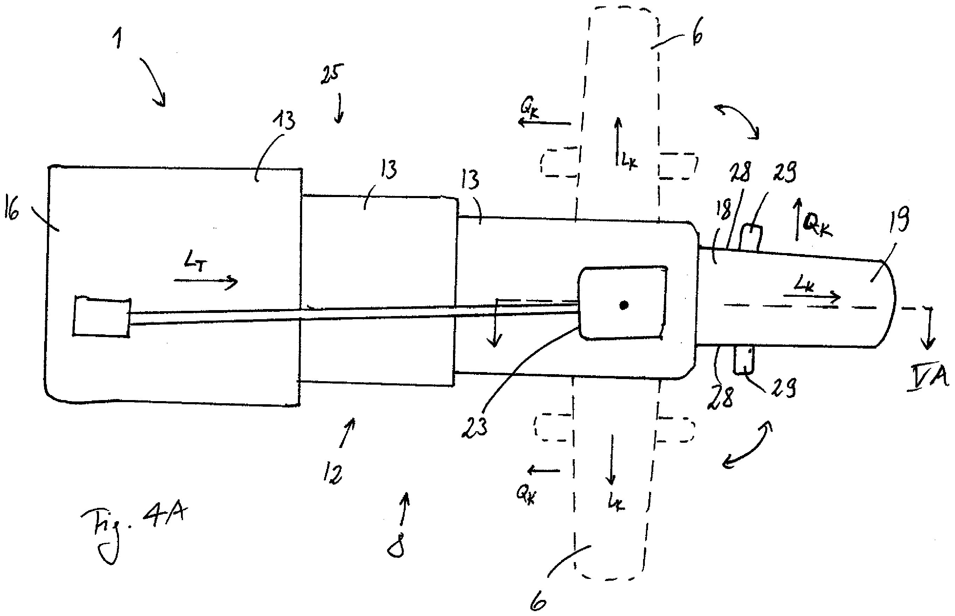

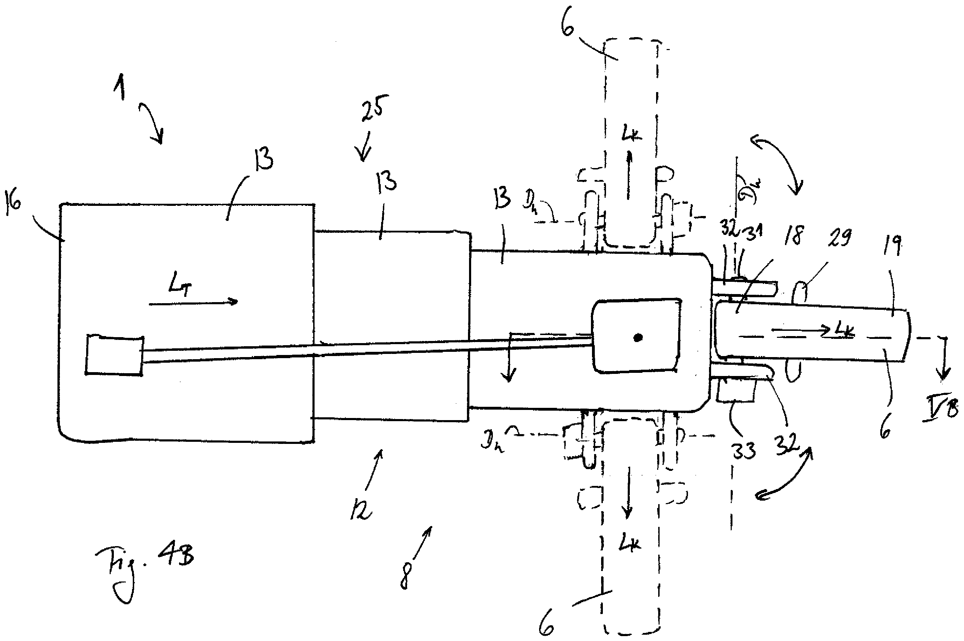

Wie in Figur 3A zu erkennen ist, weist der Kupplungsarm 6 eine Längsachse L_{K} auf und erstreckt sich entlang dieser Längsachse L_{K} von einem dem Drehgelenk 9 zugewandten vorderen Endstück 18 des Kupplungsarms 6 bis zu einem dem Drehgelenk 9 abgewandten hinteren Endstück 19 des Kupplungsarms 6 und erstreckt sich hierbei über eine Länge zwischen etwa 0,3 m bis etwa 1 m, beispielsweise über eine Länge von etwa 0,5 m. Ferner weist der Kupplungsarm 6 eine maximale Breite (gemessen entlang einer Querachse Q_{K} des Kupplungsarms 6, siehe Figur 4A) zwischen etwa 10 cm bis etwa 40 cm, vorliegend beispielsweise 20 cm, auf und eine maximale Dicke (gemessen entlang einer Hochachse H_{K} des Kupplungsarms) zwischen 10 cm bis etwa 40 cm, vorliegend beispielsweise etwa 15 cm.

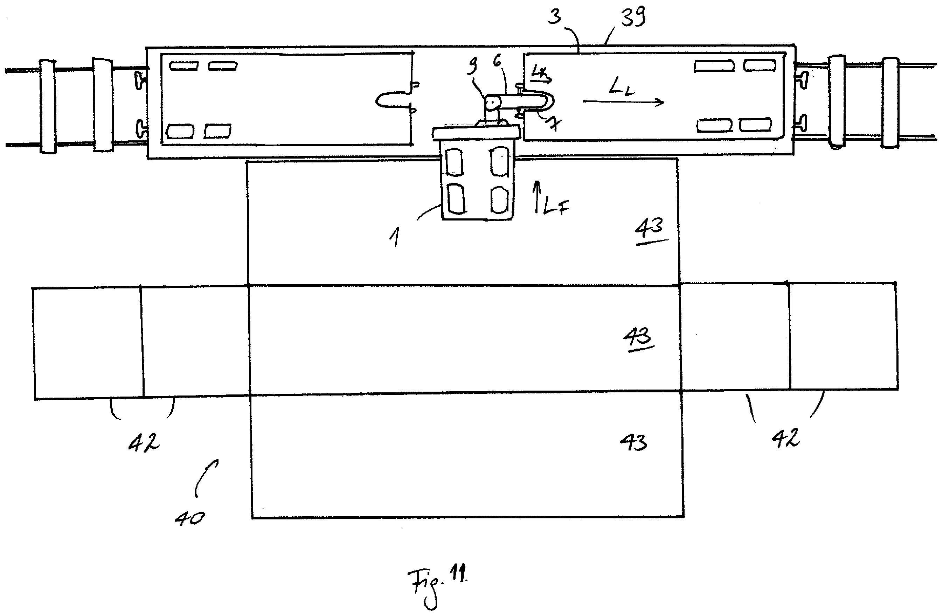

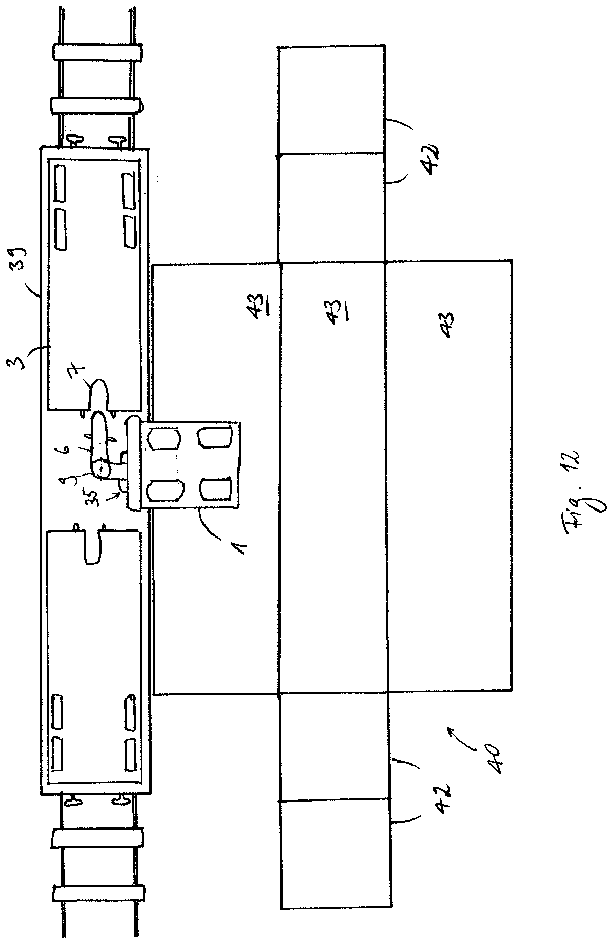

Wie besonders gut in Figur 4A zu erkennen ist, sind an Seitenflächen 28 des vorderen Endstücks 18 des Kupplungsarms 6 zwei seitliche Sicherungszapfen 29 angeordnet sein. Wie beispielsweise in Figur 2 zu erkennen ist, weist die Ladeplattform 2 zwei Stützarme 30 auf, welche seitlich des Kupplungsmauls 5 angeordnet und parallel zur Längsachse L_{L} der Ladeplattform ausgerichtet sind zum Abstützen auf den Sicherungszapfen 29 des in das Kupplungsmaul 7 eingeführten Kupplungsarms 6, vgl. hierzu beispielsweise auch Figuren 11 und 12. Durch Anheben der Ladeplattform 3 mittels des Kupplungsarms 6, wird dieser in dem Kupplungsmaul 7 fixiert, so dass die Ladeplattform 3 mittels der Kupplungsvorrichtung 1 gezogen oder geschoben werden kann. Die Ladeplattform weist hierzu außerdem, wie ebenfalls in Figuren 1 und 2 zu erkennen ist, mindestens eine Radachse 34 auf.

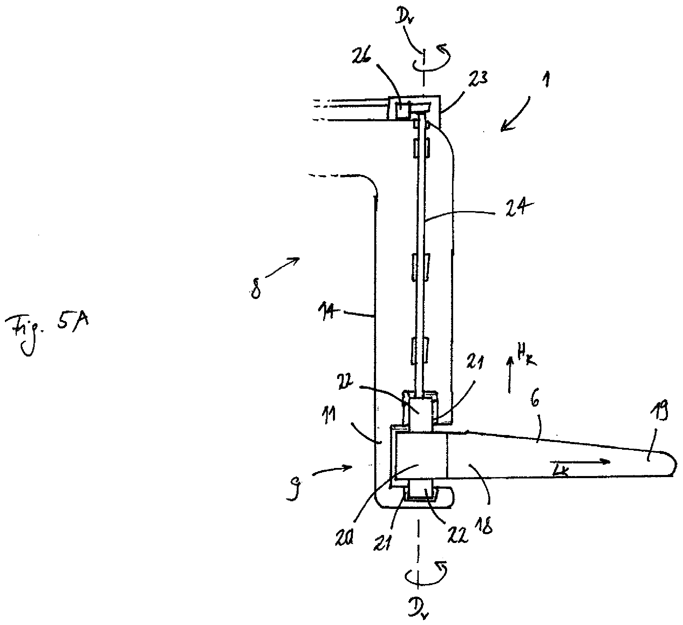

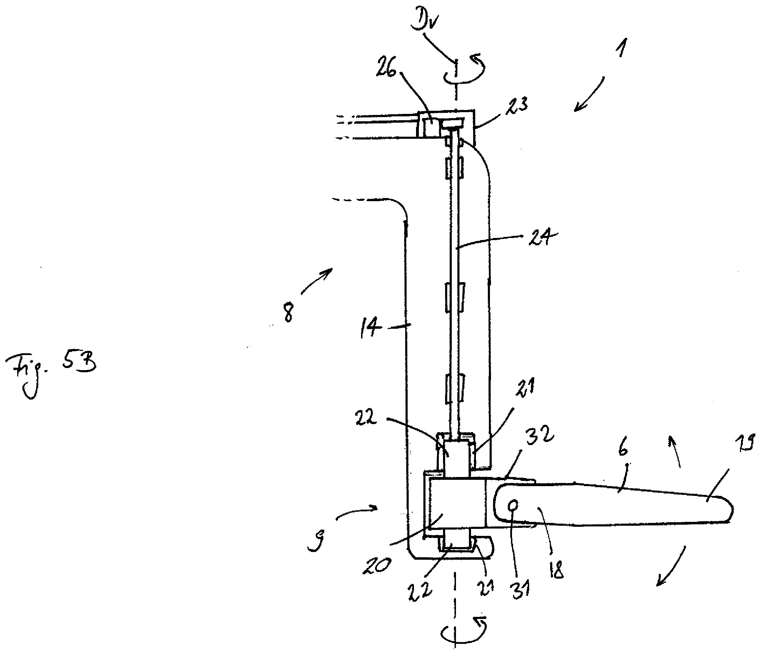

Wie besonders gut in Figuren 3A und 5A zu erkennen ist, grenzt ein erstes Gelenkelement 20 des Drehgelenks 9 von vorne an das vordere Endstück 18 des Kupplungsarms 9 an und ist so mit dem Kupplungsarm direkt und drehfest verbunden. Entsprechend grenzt ein zweites Gelenkelement 21 des Drehelements 9 an das Zwischenglied 8 an, genauer an den Teilabschnitt 14 des Trägers bzw. an den hinteren Bereich des Zwischenglieds 8, und ist so mit dem Zwischenglied 8 verbunden. In dem gezeigten Beispiel ist umfasst das erste Gelenkelement eine parallel zur vertikalen Drehachse Dᵥ verlaufende Welle 22, die drehfest mit dem Kupplungsarm 6 verbunden ist. Das zweite Gelenkelement 21 ist in diesem Beispiel als ein Drehlager (Radiallager) für das erste Gelenkelement, bzw. dessen Welle 22. Die Kupplungsvorrichtung 1 weist einen ersten Antrieb 23 für das Drehgelenk 8 auf, der über eine parallel zur vertikalen Drehachse Dᵥ verlaufenden Antriebswelle 24 mit der Welle 22 des ersten Gelenkelements 20 drehfest verbunden ist, so dass mittels des ersten Antriebs 23 über die Drehwelle 24 der Kupplungsarm 6 um die vertikale Drehachse Dᵥ des Drehgelenks 9 gedreht werden kann. Der erste Antrieb 23 kann, wie ggf. auch alle weiteren Antriebe der Kupplungsvorrichtung 1, beispielsweise als ein hydraulisches Getriebe oder als ein mechanisches Getriebe oder als ein elektrisches Getriebe ausgestaltet sein. So umfasst die Kupplungsvorrichtung beispielsweise auch einen Antrieb (nicht dargestellt) für das durch die teleskopierbaren Teilabschnitte 13 des Trägers 12 gebildete Schubgelenk 25.

Es wäre prinzipiell auch möglich, dass die Welle 22 als Teil des zweiten Gelenkelements drehfest mit dem Zwischenglied 8 verbunden ist (strenggenommen handelt es sich bei der Welle 22 in diesem Fall um eine drehfeste Achse des Drehgelenks). Dann wäre das erste Gelenkelement 20 entsprechend als Drehlager (Radiallager) für das zweite Gelenkelement 21 (bzw. dessen Welle 22) ausgestaltet. Der erste Antrieb könnte in diesem Fall beispielsweise auch am hinteren Endstück 17 des Trägers 12 angeordnet sein.

Wie besonders aus Figuren 1 und 4A verständlich wird, kann bei dem seitlichen Schwenken des Kupplungsarms 6 um die vertikale Drehachse Dᵥ ein Winkel zwischen der Längsachse L_{K} des Kupplungsarms 6 und der Längsachse L_{T} des Träger 12 wie ggf. auch der Längsachse L_{F} des Fahrzeugs 2 verkleinert oder vergrößert werden, letzteres insbesondere ohne gleichzeitig die relative Ausrichtung des Zwischenglieds 8 bzw. Trägers 12 zum Fahrzeug 2 zu verändern. Beim seitlichen Schwenken des Kupplungsarms 6 ändert sich entsprechend auch der Winkel zwischen der Längsachse L_{L} der Ladeplattform und der Längsachse L_{F} des Fahrzeugs ändern.

Der Antrieb 23 beinhaltet auch eine hintere Arretiervorrichtung 26, mit der das Drehgelenk 9 in einer momentanen Ausrichtung des Kupplungsarms 6 relativ zum Zwischenglied 8 arretiert werden kann, um so Drehungen des Kupplungsarms 6 um die vertikale Drehachse Dᵥ zu blockieren. Zusätzlich umfasst die Kupplungsvorrichtung 1 eine vordere Arretiervorrichtung 27 zum Arretieren des Zwischenglieds 8 in einer momentanen Ausrichtung des Zwischenglieds 8 relativ zum Fahrzeug 2, wobei die vordere Arretiervorrichtung beispielsweise als hydraulisch axial verschiebbarer Sicherungsbolzen ausgestaltet ist. Das Fahrzeug 2 weist in diesem Beispiel entsprechende Aufnahmen (nicht dargestellt) für vordere Arretiervorrichtung 27 auf. Die vordere Arretiervorrichtung 26 und die hintere Arretiervorrichtung 27 sind über eine Steuereinheit (nicht dargestellt) gleichlaufend oder aber auch im gegenseitigen Wechsel arretierbar und wieder lösbar, um im letzteren Fall abwechselnd das Zwischenglied 8 relativ zum Fahrzeug 2 und den Kupplungsarm 6 relativ zum Zwischenglied 5 arretieren zu können.

Wie in Figur 4A zur erkennen ist, kann der Kupplungsarm 6 um die vertikale Drehachse Dᵥ, jeweils ausgehend von einer Mittenausrichtung des Kupplungsarms 6 (hier mit durchgezogenen Linien dargestellt), in eine erste Drehrichtung um 90° in eine Linksausrichtung (mit gestichelten Linien dargestellt) gedreht werden und außerdem in eine zur ersten Drehrichtung entgegengesetzte zweite Drehrichtung um 90° in einer Rechtsausrichtung (ebenfalls mit durchgezogenen Linien dargestellt) gedreht werden. In der genannten Mittenausrichtung ist der Kupplungsarm 6 gerade ausgerichtet, also typischerweise entlang der Längsachse L_{T} des Trägers.

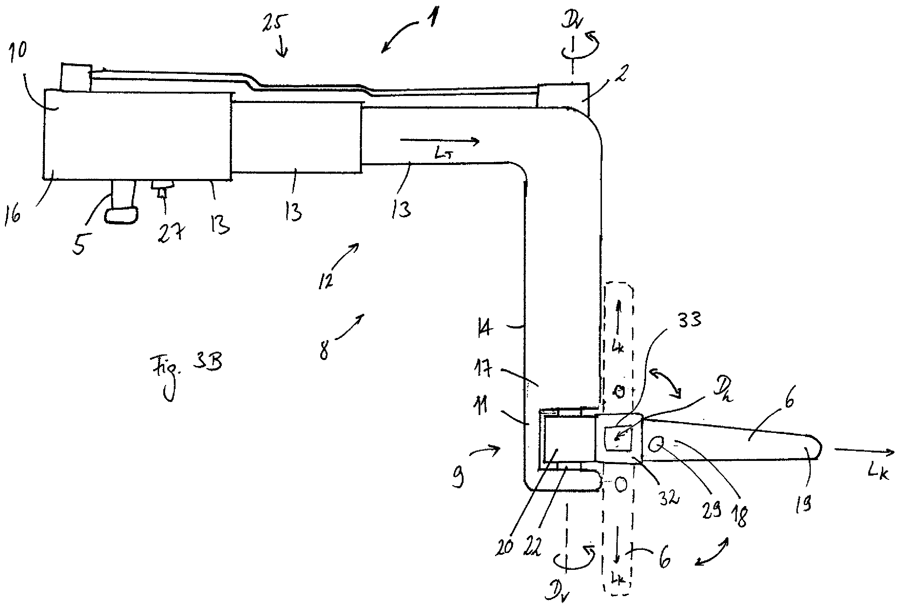

In Figuren 3B, 4B, 5B ist ein weiteres Ausführungsbeispiel einer Kupplungsvorrichtung 1 hier vorgeschlagener Art dargestellt, die sich von der in Fig. 2A, 4A, 5A gezeigten Kupplungsvorrichtung dadurch unterscheidet, dass das Drehgelenk der in Figuren 3B, 4B, 5B gezeigten Kupplungsvorrichtung 1 zusätzlich zur vertikalen Drehachse Dᵥ eine horizontale Drehachse Dₕ aufweist. In dem in Figur 1 gezeigten Fall eines ebenen Untergrunds bedeutet horizontal wiederum parallel zum ebenen Untergrund. Das Drehgelenk 9 ist in dem in Figuren 3B, 4B, 5B gezeigten Beispiel als ein Kardangelenk ausgestaltet, welches zusätzliche zu dem ersten Gelenkelement 20 und dem zweiten Gelenkelement 21 zusätzlich noch ein drittes Gelenkelement 31 und ein viertes Gelenkelement 32 aufweist, prinzipiell sind aber auch andere Konfigurationen des Drehgelenks 9 möglich. Im vorliegenden Fall ist das dritte Gelenkelement als eine drehfest mit dem Kupplungsarm 6 verbundene (horizontal verlaufende) Welle ausgestaltet. Das vierte Gelenkelement 32 umfasst ein Drehlager (Radiallager), in dem das dritte Gelenkelement 31 drehbar gelagert ist. Die Kupplungsvorrichtung 1 umfasst außerdem einen weiteren Antrieb 33 für Drehungen um die horizontale Drehachse Dₕ.

m vorliegenden Fall ist der Kupplungsarm 6 dieser Kupplungsvorrichtung 6 um die horizontale Drehachse Dₕ, jeweils ausgehend von der bereits oben definierten Mittenausrichtung des Kupplungsarms 6, in eine dritte Drehrichtung um bis zu 90° nach oben und in eine zur dritten Drehrichtung entgegengesetzte vierte Drehrichtung um bis zu 90° nach unten drehbar ist. Es kann der Kupplungsarm 6 somit um 90° senkrecht nach oben oder nach geschwenkt werden, so dass die Längsachse L_{K} des Kupplungsarm jeweils vertikal ausgerichtet ist.

Beim Drehen des Kupplungsarms 6 nach unten kann die Ladeplattform 3 beispielsweise zum Entladen gekippt werden oder sogar senkrecht aufgestellt werden. Durch das Drehen um 90° nach oben kann der Kupplungsarm 6 weggeklappt werden, beispielsweise um Platz zu sparen oder um die Manövrierfähigkeit des Fahrzeugs 2 zu verbessern. Beispielsweise kann die Kupplungsvorrichtung 1 auf der dem Fahrzeug 2 abgewandten Rückseite des Zwischenglieds 8 weitere Kupplungselemente aufweisen zum Herstellen einer lösbaren Verbindung mit einer Ladeplattform 3 mittels dieser weiteren Kupplungselemente.

Figur 6 zeigt in einer Seitenansicht eine Variante des in Figur 1 gezeigten Systems 4, das sich von dem in Figur 1 gezeigten System 4 im Wesentlichen lediglich dadurch unterscheidet, dass das Fahrzeug 2 als Gabelstapler ausgebildet und die Kupplungsvorrichtung 1 hieran entsprechend angepasst ist. In Figur 7 ist dieses Fahrzeug 2 mit der Kupplungsvorrichtung 1, aber ohne die Ladeplattform 3, in einer Ansicht von oben gezeigt, wobei der Kupplungsarm 6 der Kupplungsvorrichtung 1 seitlich geschwenkt ist.

In Figuren 8 und 9 ist die in Figuren 6 und 7 gezeigte Kupplungsvorrichtung 1 gesondert dargestellt. Diese Kupplungsvorrichtung unterscheidet sich von der dem in Figuren 3A, 4A und 5A gezeigten Kupplungsvorrichtung 1 im Wesentlichen nur durch die Ausgestaltung der Kupplungsglieder 5 sowie durch ein weiteres Schubgelenk 35. Die Kupplungsglieder 5 sind hier zur Herstellung der Verbindung mit dem in Figuren 6 und 7 gezeigten Fahrzeug 2, also mit einem Gabelstapler, ausgebildet sind. Das weitere Schubgelenk 35 ist dazu ausgebildet, die Teilabschnitte 13 des Trägers in horizontaler Richtung relativ zu dem vordere Endstück 16 des Trägers 12 zu verschieben. Hierzu umfasst die Kupplungsvorrichtung 1 einen entsprechend eingerichteten weiteren Antrieb 36, der beispielsweise ein angetriebenes Zahnrad 37 und eine in das Zahnrad 37 eingreifende Zahnradplatte 38 (die Zähne des Zahnrads 37 und der Zahnradplatte 38 sind nicht dargestellt).

Die in Figuren 8 und 9 gezeigte Kupplungsvorrichtung 1 kann auch entsprechend der in Figuren 3B, 4B und 5B gezeigten Kupplungsvorrichtung 1 ausgeführt werden, in dem das Drehgelenk 9 mit einer horizontalen Drehachse Dₕ ausgestattet wird und beispielsweise wie in Figuren 3B, 4B und 5B gezeigt ausgestaltet wird. Entsprechend kann die Kupplungsvorrichtung 1 außerdem mit einer weiterem Antrieb 33 für die horizontalen Drehachse Dₕ ausgestattet werden.

Bezüglich der übrigen Elemente der in Figuren 8 und 9 gezeigten Kupplungsvorrichtung 1 wird somit auf die Beschreibung der Figuren 3A, 3B, 4A, 4B, 5A und 5B verwiesen.

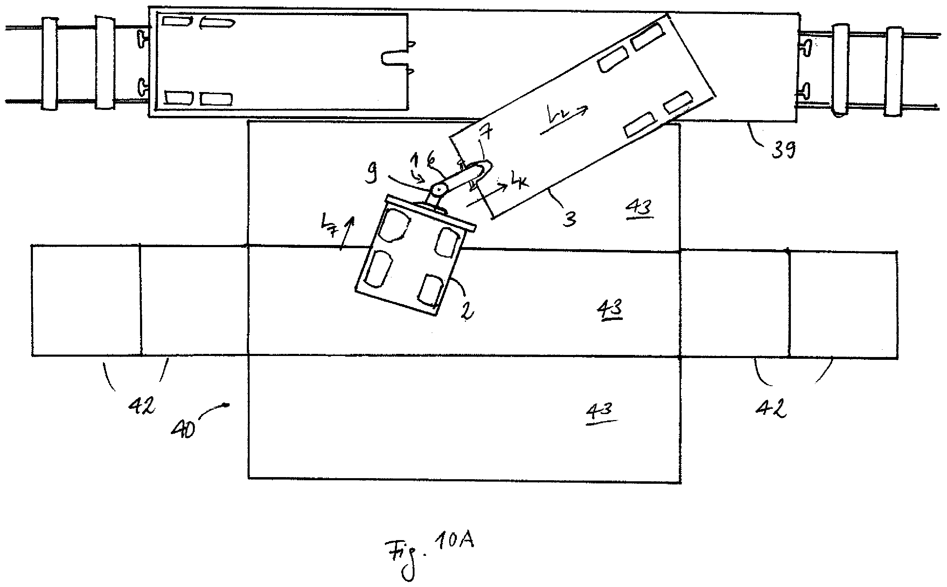

Anhand der Figuren 10A, 11 und 12 wird die Verwendung der hier vorgeschlagenen Kupplungsvorrichtung 1 am Beispiel einer Beladung eines als Flachwagen ausgestalteten Güterwaggons 39 mit einer Ladeplattform 3 über eine als mobile Laderampe 40 ausgestaltete weitere Ladeplattform. Bei dem Fahrzeug 1 handelt es sich beispielsweise um einen Gabelstapler von der in Figuren 6 und 7 gezeigten Art, der über eine Kupplungsvorrichtung 1 der in Figuren 8 und 9 gezeigten mit der Ladeplattform 3 verbunden ist. Bei der zu verladenen Ladeplattform 3 handelt es sich beispielsweise um einen Rolltrailer mit einer Länge von etwa 7 m, wobei der Güterwaggon eine Ladefläche mit einer Länge von etwa 18 m aufweist.

Mittels des Fahrzeugs 1 wird die Ladeplattform 3 zunächst über Rampenelemente 42 der mobilen Laderampe 40 auf eine Ladefläche 43 der mobilen Laderampe 40 geschoben. Von der Ladefläche 43 aus wird die Ladeplattform 3 auf den Güterwaggon 43 bewegt, siehe Figur 11, wobei sich beim Bewegen der Ladeplattform 3 der in das Kupplungsmaul 7 der Ladeplattform 3 eingeführte Kupplungsarm 6 der Kupplungsvorrichtung 1 um die vertikale Drehachse des Drehgelenks 9 dreht. Hierdurch verändert sich die relative Ausrichtung der Längsachse L_{F} des Fahrzeugs 2 zur Längsachse L_{L} der Ladeplattform 3. Ist die Ladeplattform 3 parallel zum Güterwaggon ausgerichtet, siehe Figur 11, steht im gezeigten Beispiel die Längsachse L_{F} des Fahrzeugs 2 senkrecht zur Längsachse L_{L} der Ladeplattform 3.

Wie in Figur 12 gezeigt ist, wird durch Betätigen des weiteren Schubgelenks 35 der Kupplungsvorrichtung 1 der Kupplungsarm 6 aus dem Kupplungsmaul 7 herausgezogen.

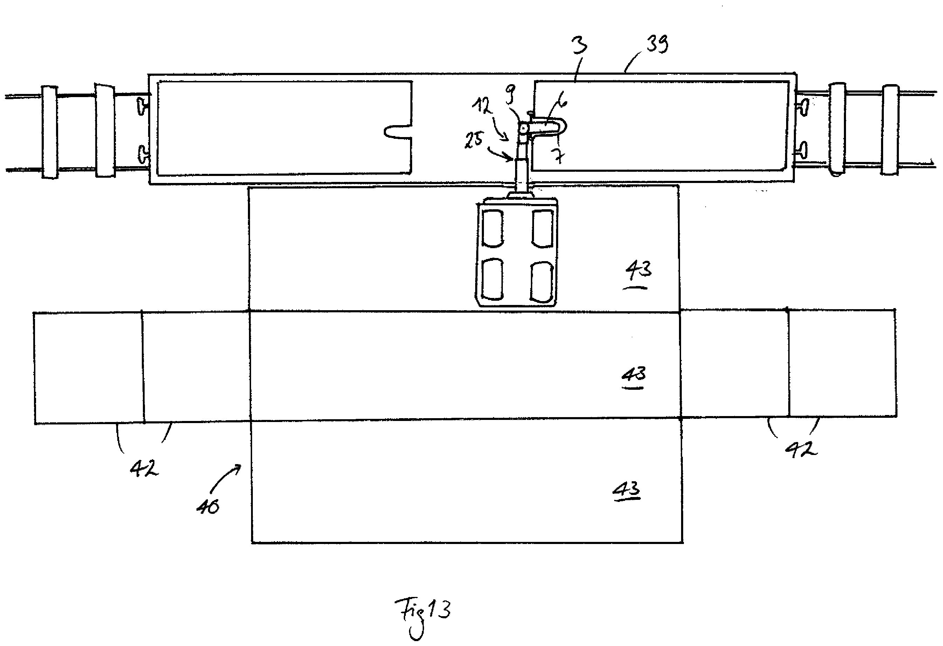

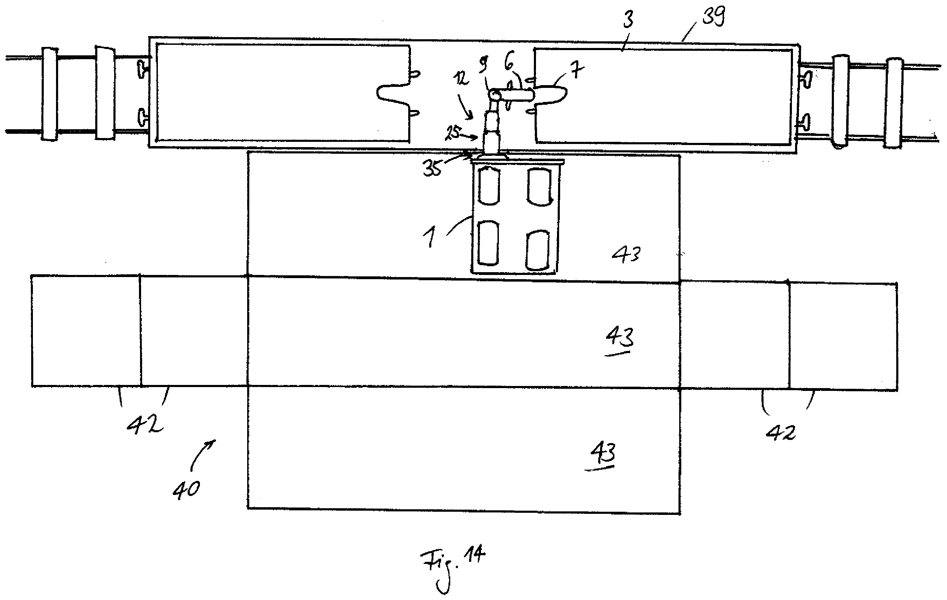

Figuren 13 und 14 verdeutlichen, dass durch Verlängern des Trägers 12 mittels des Schubgelenks 25 die Länge des Trägers 12 der Kupplungsvorrichtung 1 soweit verlängert werden kann, dass das Fahrzeug beim Verladen der Ladeplattform 3 auf den Güterwagon 39 nicht auf den Güterwagon auffahren muss, sondern vollständig auf der Ladefläche der mobilen Laderampe 40 verbleiben kann. Auch hier wird durch Betätigen des weiteren Schubgelenks 35 der Kupplungsvorrichtung 1 der Kupplungsarm 6 aus dem Kupplungsmaul 7 herausgezogen.

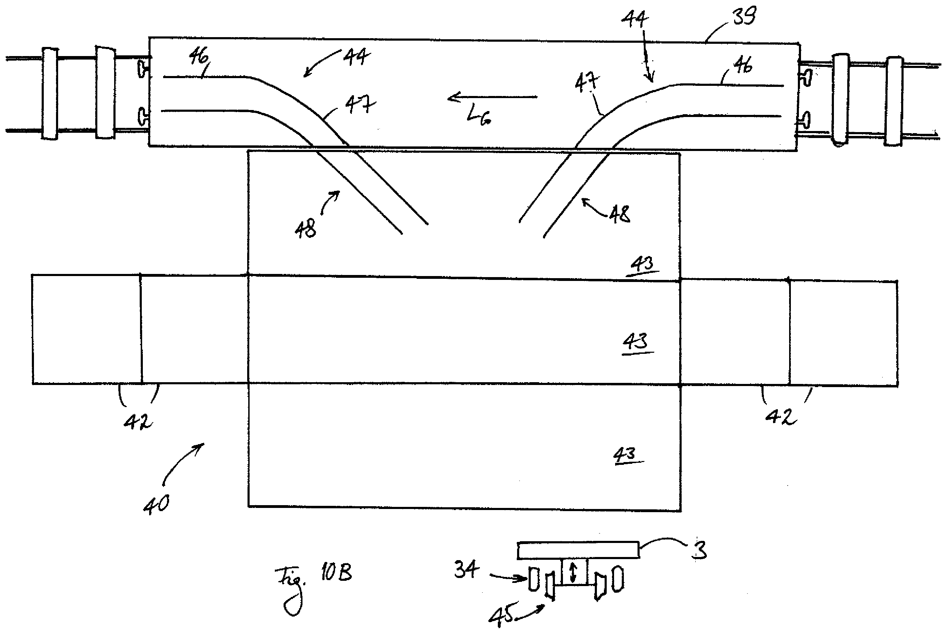

In der in Figur 10B gezeigten Variante weist die zu verladene Ladeplattform 3 zusätzlich zum mindestens einen straßentauglichen Radsatz (Radachse) 34 mindestens einen schienentauglichen Radsatz 45 (Radachse) auf, wobei diese Radsätze relativ zueinander höhenverstellbar sind mittels eines hydraulischen Antriebs. Auf der Ladefläche des Güterwagens sind für diesen schienentauglichen Radsatz 45 geeignete Schienen 44 angeordnet. Die Schienen 44 umfassen einen parallel zur Längsachse L_{G} des Güterwagens 39 verlaufenden ersten Abschnitt 46 und mindestens einen sich hieran anschließenden und in Richtung eines Seitenrandes der Ladefläche des Güterwagens abbiegenden zweiten Abschnitt 47 aufweisen, wobei dieser zweite Abschnitt sich bis zum Seitenrand der Ladenfläche fortsetzt. Die mobile Laderampe 40 weist auf ihrer Ladefläche 43 ebenfalls Schienen 48 aufweisen, die in Richtung eines Seitenrandes der Ladefläche 43 der Laderampe verlaufen und sich bis zum Seitenrand der Ladefläche 43 fortsetzen.

Wie in Figur 10B gezeigt ist und wie außerdem auch in der in Figur 15 gezeigten Seitenansicht dieser Anordnung gezeigt ist, ist die Laderampe 40 relativ zum Güterwagen 39 so ausgerichtet worden, dass die Ladeflächen von Güterwaggon und der Laderampe auf gleicher Höhe sind, die Schienen 48 der Laderampe 40 direkt an die Schienen 44 des Güterwagens 39 anschließen und die Ladeplattform 3 entlang der Schienen der Laderampe 3 auf die Schienen des Güterwagens geschoben werden kann.

Figur 15 zeigt außerdem, dass die beiden äußeren Ladeflächen 43 der mobilen Ladeplattform 40 aus Figuren 10A bis 14 sich auf Stützelementen 48 abstützen und außerdem nach oben geklappt werden können (siehe gestrichelte Linien in Figur 15), wenn die mobile Ladeplattform mittels eines Fahrzeugs 1 gezogen wird. Ebenso stützen sich die Rampenelemente auf Stützelementen (nicht dargestellt) und können auf die gleiche Weise nach oben geklappt werden. Die mobile Ladeplattform 40 weist ihrerseits ein Kupplungsmaul 7 auf.

In Figur 16 ist als ein weiteres Beispiel einer Ladeplattform 3 des hier vorgeschlagenen Systems 4 ein Rolltrailer gezeigt, der an seiner Vorderseite ein Kupplungsmaul 7 sowie zwei Stützarme 30 aufweist und auf seiner Unterseite zwei straßentaugliche Radachsen 34. Er ist beispielsweise mit einem Container 41 beladbar.

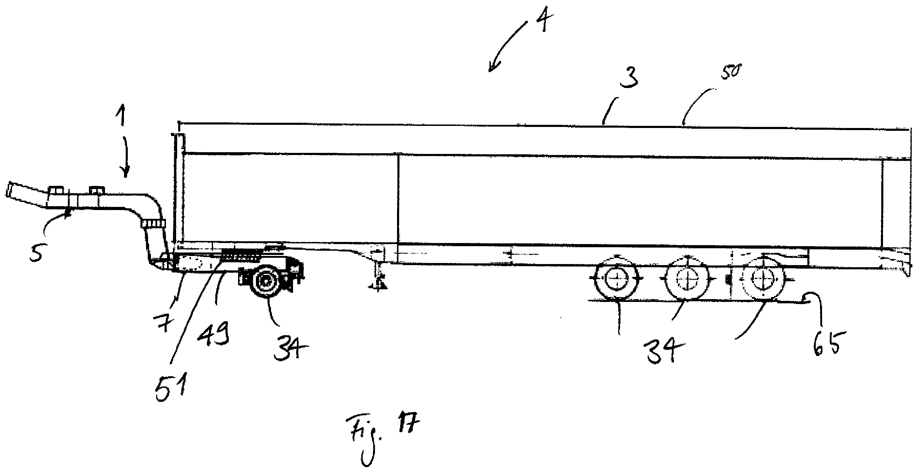

In Figur 17 ist ein System 4 mit einer Kupplungsvorrichtung 1 hier vorgeschlagener Art gezeigt, die über einen Dolly-Anhänger 49 hier vorgeschlagener Art mit einem gewöhnlichen Sattelauflieger 50 (also ohne ein eigenes Kupplungsmaul) verbunden ist. Der Dolly-Anhänger weist an seiner Vorderseite ein Kupplungsmaul 7 und an seiner Oberseite eine Sattelplatte 51 mit einer Aufnahme für einen Verbindungszapfen (Königszapfen) des Sattelaufliegers 50 auf.

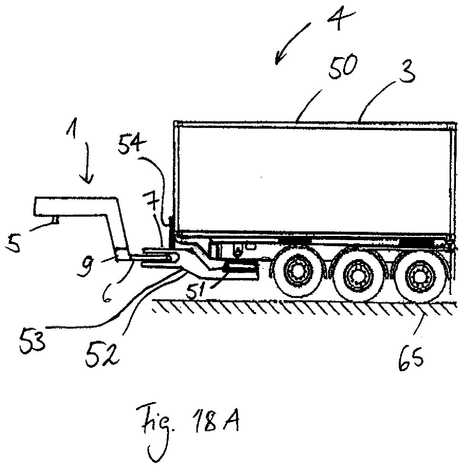

In Figur 18A ist wiederum ein System 4 mit einer Kupplungsvorrichtung 1 hier vorgeschlagener Art gezeigt, die über einen Kupplungsadapter 52 hier vorgeschlagener Art mit einem gewöhnlichen Sattelauflieger 50 verbunden ist. Der Kupplungsadapter umfasst ein Basisteil 53, das auf einer Vorderseite des Basisteils 53 ein Kupplungsmaul 7 zum Aufnehmen des Kupplungsarms 6 der Kupplungsvorrichtung 1 aufweist. Auf einer Oberseite des Basisteils 53 ist eine Sattelplatte 51 mit einer Aufnahme für einen Verbindungszapfen (nicht dargestellt) des Sattelauflegers 50 angeordnet.

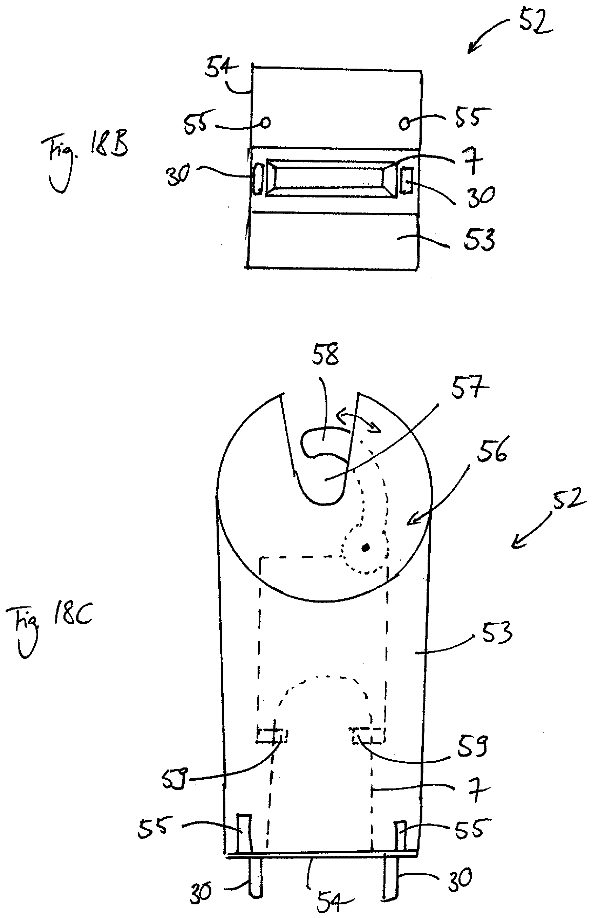

Wie besonders deutlich in Figur 18B zu erkennen ist, ist an der Vorderseite des Basisteil 53 ein plattenförmiger, vertikal nach oben ausgerichteter Träger 54 angeordnet, der mehrere Bolzen 55 (siehe Figuren 18B und 18C) aufweist, die ausgehend von dem Träger 55 nach hinten, also in Richtung der Sattelplatte 51 des Kupplungsadapters 52 ausgerichtet sind. Der Sattelauflieger 50 weist auf seiner Vorderseite eine entsprechende Anzahl von Aufnahme (nicht dargestellt) für die Bolzen 55 auf.

Wie in Figur 18C gezeigt ist, weist die Sattelplatte 51 des Kupplungsadapters 51 einen Verriegelungsmechanismus 56 auf (im Innern des Basisteils 53 bzw. der Sattelplatte 51 angeordnete Elemente sind mit gestrichelten Linien dargestellt), mit dem der Königszapfen des Sattelaufliegers 51 in einer zugehörigen Aufnahme 57 der Sattelplatte 51 verriegelt werden kann. Der Verriegelungsmechanismus 56 umfasst mindestens ein bewegliches Riegelelement 58, welches zwischen einem geöffneten Zustand und einem verriegelten Zustand bewegt werden kann (in Figur 18C durch einen Doppelpfeil angedeutet), wodurch der Königszapfen des Sattelaufliegers in der Aufnahme 57 verriegelt bzw. freigegeben werden kann. Der Verriegelungsmechanismus 56 umfasst beweglich gelagerte Elemente 59, die in das Kupplungsmaul 7 hineinragen und durch seitliches Schwenken des Kupplungsarms 6 innerhalb der Kupplungsmauls 7 betätigt werden können. Die Elemente 59 sind derart mit dem mindestens einen Riegelelement 58 verbunden, dass durch Drehen des Kupplungsarms 6 nach links ein Öffnen und durch Drehen des Kupplungsarms 6 nach rechts ein Schließen des Riegelelements 58 bewirkt wird.

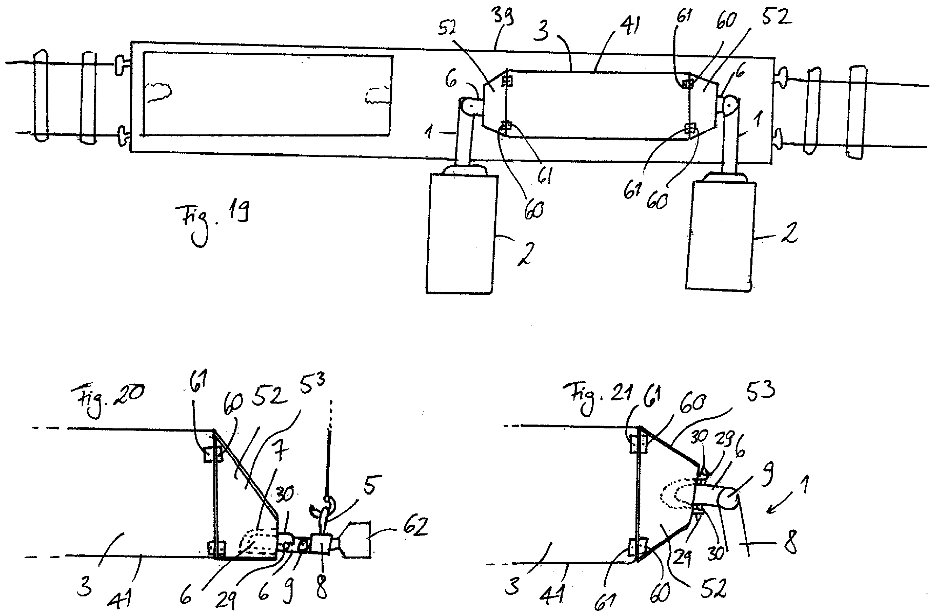

In Figur 19 sind zwei beispielsweise als Gabelstapler ausgestaltete Fahrzeuge 2 gezeigt, die jeweils über eine Kupplungsvorrichtung 1 hier vorgeschlagener Art, beispielsweise wie in Figuren 6 bis 9 gezeigt, und einen Kupplungsadapter 52 hier vorgeschlagener Art mit einer als Container 41 ausgestalteten Ladeplattform 3 verbunden sind und diese auf einen Güterwaggon 39 heben und auf diesem absetzen. Anschließend können die beiden Kupplungsadapter 52 von der Ladeplattform 3 gelöst und entfernt werden, beispielsweise mittels der Fahrzeuge 2 und der Kupplungsvorrichtungen 1, oder aber auch an der Ladeplattform 3 verbleiben.

In Figur 20 ist eine Seitenansicht auf einen der in Figur 19 gezeigten Kupplungsadapter 52 gezeigt, die mit einer Kupplungsvorrichtung 1 hier vorgeschlagener Art verbunden ist. Zu erkennen ist, das der Kupplungsadapter 52 auf einer Vorderseite eines Basisteils 53 des Kupplungsadapters 52 ein Kupplungsmaul 7 aufweist und an einer Rückseite des Basisteils 53 Kupplungselemente 60, die mit korrespondierenden Kupplungselementen 61, die auf der Vorderseite bzw. Rückseite der Ladeplattform 61 angeordnet sind, lösbar verbunden sind. In diesem Beispiel sind die Kupplungselemente 60, 61 als Twistlockelemente ausgestaltet. Die hier gezeigte Kupplungsvorrichtung 1 weist ein Zwischenglied 8 auf, an dessen Oberseite ein als Schwerlastöse ausgestaltetes Kupplungsglied 5 angeordnet ist, mit der es über ein Seil oder eine Kette mit einem Fahrzeug, wie beispielsweise einem Kran oder einem Gabelstapler (nicht dargestellt), verbunden ist. An der Rückseite des Zwischenglieds 9 ist ein Kupplungsarm 6 angeordnet, der über ein Drehgelenk 9 mit dem Zwischenglied 9 drehbar verbunden ist und in das Kupplungsmaul 7 des Kupplungsadapters 52 eingeführt ist. An der Vorderseite des Zwischenglieds 9 ist ein Gegengewicht 62 angeordnet zur Stabilisierung der an der Schwerlastöse aufgehängten Kupplungsvorrichtung 1.

Figur 21 zeigt eine Ansicht von oben auf den in Figur 20 gezeigten Kupplungsadapter 52, der wiederum mit einer Kupplungsvorrichtung 1 hier vorgeschlagener Art verbunden ist. Zu erkennen sind wiederum die an der Rückseite des Basisteils 53 des Kupplungsadapters 52 angeordneten Kupplungselemente 60, die mit den korrespondierenden Kupplungselementen 61 der Ladeplattform 61 lösbar verbunden sind. Zu erkennen sind außerdem Stützarme 30 des Kupplungsadapters 52, die auf der Vorderseite des Basisteils 53 seitlich am Kupplungsmaul 7 angeordnet sind zum Abstützen auf korrespondierenden Sicherungszapfen 29 des in das Kupplungsmaul eingeführten Kupplungsarms 6 der Kupplungsvorrichtung 1.

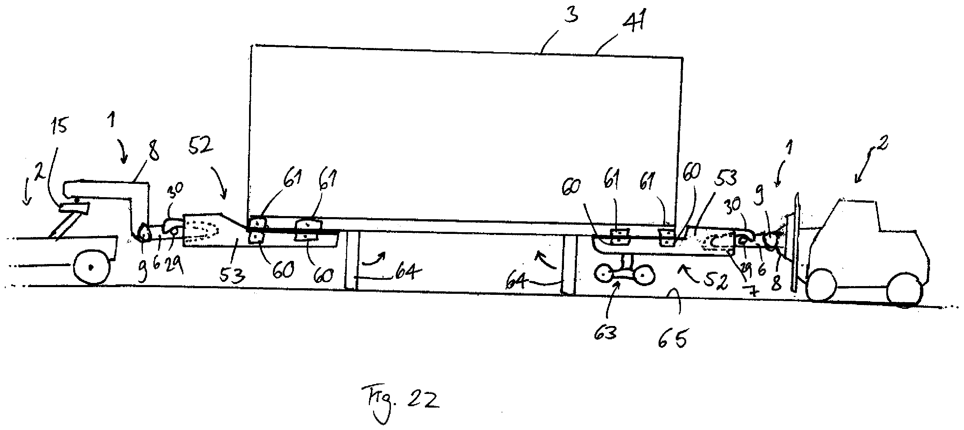

In Figur 22 sind zwei Fahrzeuge 2 gezeigt, die jeweils über eine Kupplungsvorrichtung 1 hier vorgeschlagener Art und einen Kupplungsadapter 52 hier vorgeschlagener Art mit einer Ladeplattform 3 verbunden sind. Bei dem linken Fahrzeug 1 und der linken Kupplungsvorrichtung 1 kann es sich beispielsweise um das in Figur 1 gezeigte Fahrzeug 1 bzw. um die in Figur 1 gezeigte Kupplungsvorrichtung 1 handeln. Bei dem rechten Fahrzeug 1 und der rechten Kupplungsvorrichtung 1 kann es sich beispielsweise um das in Figur 6 gezeigte Fahrzeug 1 bzw. um die in Figur 6 gezeigte Kupplungsvorrichtung 1 handeln.

Die beiden Kupplungsadapter 52 weisen jeweils ein Basisteil 53, das an seiner Oberseite Kupplungselemente 60 aufweist, die beispielsweise als Twistlockelemente ausgestaltet sind. Die Ladeplattform 3 ist als ein Container 41 (alternativ als eine Containerpritsche) ausgestaltet und weist auf ihrer Unterseite Kupplungselemente 61, die in diesem Beispiel ebenfalls als Twistlockelemente ausgestaltet sind und mit den korrespondierenden Kupplungselementen 60 der Kupplungsadapter 52 lösbar verbunden sind. Der rechte Kupplungsadapter 52 weist auf seiner Unterseite außerdem einen straßentauglichen (und/oder einen schienentauglichen) Radsatz 63 auf.

Mittels der Fahrzeuge 2 kann die Ladeplattform 3 über die Kupplungsvorrichtungen 1, deren Kupplungsarme 6 in Kupplungsmäuler 7 der Kupplungsadapter 52 eingeführt sind, angehoben werden. Anschließend können Stützbeine 64 auf der Unterseite der Ladeplattform entfernt, eingezogen oder hochgeklappt werden. Mittels des rechten Fahrzeugs 2 wird der rechte Kupplungsadapter 52 abgesenkt und mit dem Radsatz 63 auf dem Untergrund 65 abgesetzt. Mit dem linken Fahrzeug 2 kann anschließend, ggf. nach einem teilweisen Absenken der linken Kupplungsvorrichtung 1, die Ladeplattform 3 bewegt (gezogen oder geschoben) werden, wobei die Ladeplattform über den Radsatz 63 abrollt.

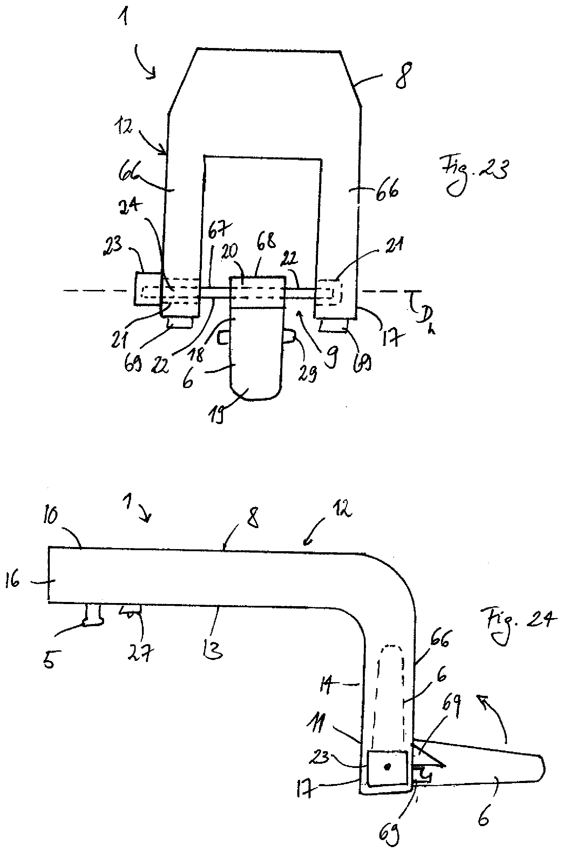

In Figuren 23 bis 25 sind verschiedene Ansichten einer weiteren Ausführungsform der vorgeschlagenen Kupplungsvorrichtung 1. Bei dieser weist das Zwischenglied 8 einen L-förmigen Träger 14 mit zwei Außenträgern 66 auf, welche parallel zueinander verlaufen und vertikal verlaufende Teilabschnitte 14 des Trägers 12 darstellen und jeweils an einem im Wesentlichen horizontal verlaufenden Teilabschnitt 13 des Trägers 12 ansetzen. Die beiden Außenträger 66 sind durch einen im Wesentlichen horizontal verlaufenden Querträger 67 miteinander verbunden. Der Kupplungsarm 6 ist über sein vorderes Endstück 18 an dem Querträger 67 zwischen den beiden Außenträgern 66 mittels einer Aufhängung 68 aufgehängt, bei der es sich in diesem Beispiel um eine drehfeste Verbindung zwischen dem Kupplungsarm 6 und dem Querträger 67 handelt und bildet zusammen mit dem Querträger 67 ein erstes Gelenkelement 20 des Drehgelenks 9 der Kupplungsvorrichtung 1. Der Querträger 67 hat die Funktion einer Welle 22 und ist mit einem entsprechend ausgestalteten Antrieb 23 verbunden. An jedem der beiden Außenträger 66 ist jeweils ein zweites Gelenkelelement 21 des Drehgelenks 9 angeordnet, die als Lagerelemente für den Querträger 67 bzw. die Welle 22 ausgestaltet sind. Das Drehgelenks 9 weist somit eine horizontale Drehachse Dₕ aufweist, die den Querträger 67 koaxial durchläuft, wobei der Querträger 67 in den Lagerelementen um die horizontale Drehachse Dₕ des Drehgelenks 9 drehbar gelagert ist.

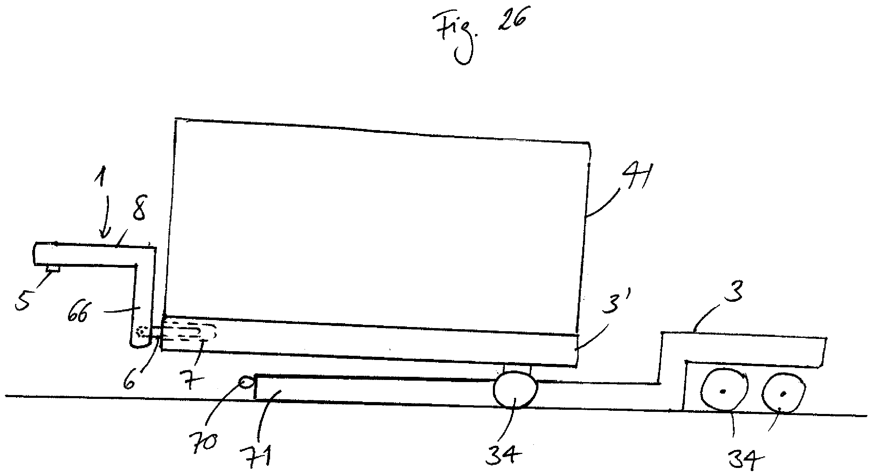

Das Zwischenglied 8 der Kupplungsvorrichtung 1 weist auf seiner Rückseite zusätzlich zu dem Kupplungsarm 6 weitere Kupplungselemente 69 auf, die beispielweise an unteren bzw. hinteren Endstücken 17 der Außenträger 69 angeordnet sind und die typischerweise ebenso wie der Kupplungsarm freitragend über die Rückseite des Zwischenglieds 8 nach hinten herausragen. Diese Kupplungselemente 69 sind zur Herstellung einer lösbaren Verbindung mit korrespondierenden Kupplungselementen 70 der Ladeplattform, siehe Figuren 26 bis 28, ausgestaltet. Bei den Kupplungselementen 69, 70 handelt es sich beispielsweise um Hakenelemente und korrespondierende Aufnahmeelemente, welche miteinander in einen lösbaren Eingriff bringbar sind. Die Kupplungsvorrichtung 1 umfasst ferner einen Verriegelungsmechanismus mit einem Antrieb, mittels dessen die Kupplungselemente 69 geöffnet und geschlossen werden können.

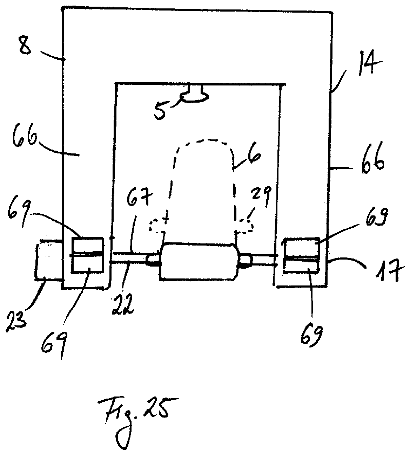

Durch Drehen des Kupplungsarms 6 mittels des Drehgelenks um etwa 90° um die horizontale Drehachse Dₕ senkrecht nach oben kann der Kupplungsarm 6 weggeklappt werden, siehe die gestrichelten Darstellungen des Kupplungsarms in Figuren 24 und 25.

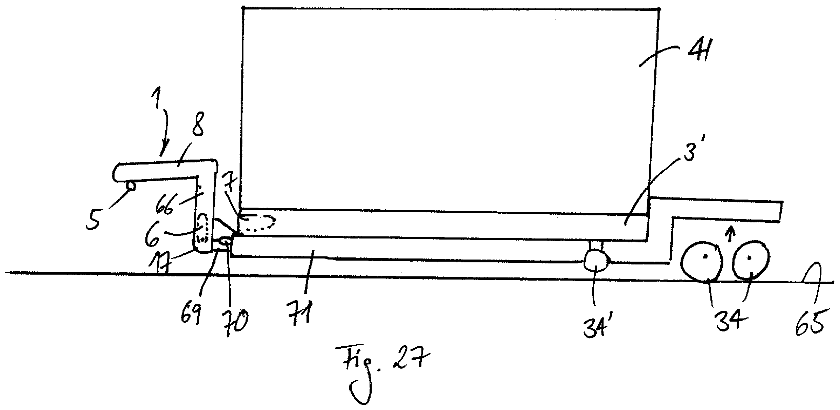

In Figuren 26 bis 28 ist eine zweite Ladeplattform 3' mit einem Kupplungsmaul 7 gezeigt, die mittels der in Figur 23 gezeigten Kupplungsvorrichtung 1 auf ein Tiefbett 71 einer ersten Ladeplattform 3 verladen wird (das hierfür verwendete Fahrzeug ist nicht dargestellt). Wie in Figur 26 dargestellt ist, kann (nachdem der Kupplungsarm 6 der Kupplungsvorrichtung 1 in das Kupplungsmaul 7 der zweiten Ladeplattform 3' eingeführt worden ist) die zweite Ladeplattform 3' mittels der Kupplungsvorrichtung 1 einseitig angehoben und mittels der Räder 34' dieser Ladeplattform 3' so über das Tiefbett 71 gerollt werden, dass das Tiefbett 71 in einem Zwischenraum 72 zwischen den linken und rechten Rädern 34' der zweiten Ladeplattform 3'unter der zweiten Ladeplattform 3' angeordnet ist, siehe Figur 27. Anschließend kann die zweite Ladeplattform 3'auf dem Tiefbett 71 abgesetzt werden und der Kupplungsarm 6 und dem Kupplungsmaul 7 der zweiten Ladeplattform 3' heraus bewegt werden. Wie in Figur 27 gezeigt ist, kann die erste Ladeplattform 3 mit der Kupplungsvorrichtung 1 über die Kupplungselemente 69 und 70 der Kupplungsvorrichtung 1 bzw. der Ladeplattform 3 verbunden werden (die Kupplungselemente 69, 70 sind in Figur 26 nicht eingezeichnet), nachdem zuvor der Kupplungsarm 6 der Kupplungsvorrichtung 1 nach oben weggedreht worden ist (siehe gestrichelte Darstellung des Kupplungsarms 6 in Figur 27). Nun kann das Tiefbett 71 mittel der Kupplungsvorrichtung 1 und ggf. einer eigenen (beispielsweise hydraulischen) Hebeeinrichtung der Radachsen 34 der ersten Ladeplattform 3, soweit angehoben werden, bis zwischen den Rädern 34' der zweiten Ladeplattform 3' und dem Untergrund 65 kein Kontakt mehr besteht und ein ausreichend großer Abstand hergestellt worden ist. Anschließend kann die erste Ladeplattform 3 mittels der Kupplungsvorrichtung 1 gezogen oder geschoben werden.

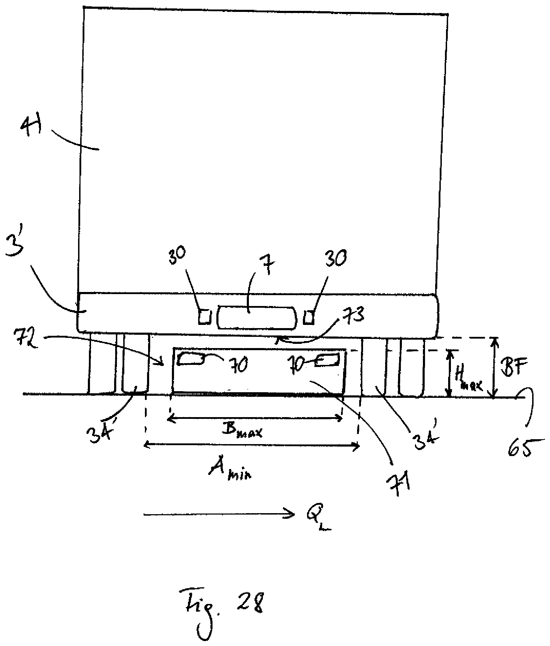

Wie in Fig. 28 dargestellt ist, weist das Tiefbett 71 der ersten Ladeplattform 3 eine maximale Breite Bₘₐₓ auf (gemessen in Richtung der Querachse des Tiefbetts), die geringer ist als ein minimaler Abstand Aₘᵢₙ zwischen den linken und rechten Rädern 34' der zweiten Ladeplattform 3' (gemessen in Richtung der Querachse der zweiten Ladeplattform 3'). Außerdem ist eine maximale Höhe Hₘₐₓ des Tiefbetts 71 kleiner als eine Bodenfreiheit BF der zweiten Ladeplattform 3' (definiert als der kleinste Abstand zwischen dem Untergrund 65 und dem niedrigsten festen Bereich der zweiten Ladeplattform 3' zwischen den linken und rechten Rädern der zweiten Ladeplattform 3').

### Bezugszeichen liste:

- 1: Kupplungsvorrichtung
- 2: Fahrzeug
- 3: Ladeplattform
- 4: System
- 5: Kupplungsglied
- 6: Kupplungsarm
- 7: Kupplungsmaul
- 8: Zwischenglied
- 9: Drehgelenk
- 10: vorderer Bereich
- 11: hinterer Bereich
- 12: Träger
- 13: Teilabschnitt
- 14: Teilabschnitt
- 15: Kupplungselement
- 16: vorderes Endstück
- 17: hinteres Endstück
- 18: vorderes Endstück
- 19: hinteres Endstück
- 20: erstes Gelenkelement
- 21: zweites Gelenkelement
- 22: Welle
- 23: Antrieb
- 24: Antriebswelle
- 25: Schubgelenk
- 26: hintere Arretiervorrichtung
- 27: vordere Arretiervorrichtung
- 28: Seitenflächen
- 29: Sicherungszapfen
- 30: Stützarme
- 31: drittes Gelenkelement
- 32: viertes Gelenkelement
- 33: weiterer Antrieb
- 34: Radachse
- 35: weiteres Schubgelenk
- 36: weiterer Antrieb
- 37: Zahnrad
- 38: Zahnradplatte
- 39: Güterwaggon
- 40: mobile Laderampe
- 41: Container
- 42: Rampenelement
- 43: Ladefläche
- 44: Schienen
- 45: schienentauglicher Radsatz
- 46: erster Abschnitt von Schienen
- 47: zweiter Abschnitt von Schienen
- 48: Stützelement
- 49: Dolly-Anhänger
- 50: Sattelauflieger
- 51: Sattelplatte
- 52: Kupplungsadapter
- 53: Basisteilteil
- 54: Träger
- 55: Bolzen
- 56: Verriegelungsmechanismus
- 57: Aufnahme
- 58: Riegelelement
- 59: Element
- 60: Kupplungselement
- 61: Kupplungselement
- 62: Gegengewicht
- 63: Radsatz
- 64: Stützbein
- 65: Untergrund
- 66: Außenträger
- 67: Querträger
- 68: Aufhängung
- 69: Kupplungselement
- 70: Kupplungselement
- 71: Tiefbett
- 72: Zwischenraum
- 73: Bereich

- Dᵥ: vertikale Drehachse
- Dₕ: horizontale Drehachse
- L_{K}: Längsachse eines Kupplungsarms
- H_{K}: Hochachse eines Kupplungsarms
- Q_{K}: Querachse eines Kupplungsarms
- L_{T}: Längsachse eines Trägers
- H_{T}: Hochachse eines Trägers
- Q_{T}: Querachse eines Trägers
- L_{F}: Längsachse eines Fahrzeugs
- H_{F}: Hochachse eines Fahrzeugs
- Q_{F}: Querachse eines Fahrzeugs
- L_{L}: Längsachse einer Ladeplattform
- H_{L}: Hochachse einer Ladeplattform
- Q_{L}: Querachse einer Ladeplattform

## Patentansprüche

1. Kupplungsvorrichtung (1) zum Herstellen einer lösbaren Verbindung zwischen einem Fahrzeug (2) und einer Ladeplattform (3) für schwere Transportgüter, wobei die Kupplungsvorrichtung (1) ein Kupplungsglied (5) zum Verbinden der Kupplungsvorrichtung (1) mit dem Fahrzeug (2) und einen Kupplungsarm (6) zum Einführen des Kupplungsarms (6) in ein Kupplungsmaul der Ladeplattform (3) umfasst, wobei die Kupplungsvorrichtung (1) außerdem ein Zwischenglied (8) umfasst, welches zwischen dem Kupplungsglied (5) und dem Kupplungsarm (6) angeordnet ist, wobei die Kupplungsvorrichtung (1) ein Drehgelenk (9) umfasst, welches den Kupplungsarm (6) mit dem Zwischenglied (8) drehbar verbindet,
wobei das Drehgelenk (9) eine vertikale Drehachse aufweist, um die der Kupplungsarm (6) relativ zum Zwischenglied (8) seitlich schwenkbar ist,
**dadurch gekennzeichnet,**
**dass** der Kupplungsarm (6) um die vertikale Drehachse, ausgehend von einer Mittenausrichtung des Kupplungsarms (6), um 90° in eine erste Drehrichtung und um 90° in eine zur ersten Drehrichtung entgegengesetzte zweite Drehrichtung schwenkbar ist.

2. Kupplungsvorrichtung (1) nach Anspruch 1, **dadurch gekennzeichnet,**
**dass** sich der Kupplungsarm (6) entlang einer Längsachse des Kupplungsarms (6) von einem dem Drehgelenk (9) zugewandten vorderen Endstück des Kupplungsarms (6) bis zu einem dem Drehgelenk (9) abgewandten hinteren Endstück des Kupplungsarms (6) erstreckt, wobei ein erstes Gelenkelement des Drehgelenks (9) an das vordere Endstück des Kupplungsarms (6) angrenzt und mit dem Kupplungsarm (6) verbunden ist und ein zweites Gelenkelement des Drehelements an das Zwischenglied (8) angrenzt und mit dem Zwischenglied (8) verbunden ist, wobei das erste Gelenkelement und das zweite Gelenkelement des Drehgelenks (9) um die vertikale Drehachse des Drehgelenks (9) relativ zueinander drehbar sind.

3. Kupplungsvorrichtung (1) nach einem der vorangehenden Ansprüche,
**dadurch gekennzeichnet, dass** das Drehgelenk (9) eine horizontale Drehachse aufweist, um die der Kupplungsarm (6) relativ zum Zwischenglied (8) nach oben und unten schwenkbar ist.

4. Kupplungsvorrichtung (1) nach einem der vorangehenden Ansprüche,
**dadurch gekennzeichnet, dass** die Kupplungsvorrichtung (1) außerdem ein Schubgelenk (25) umfasst, das ausgebildet ist, den Kupplungsarm (6) relativ zum Kupplungsglied (5) entlang mindestens einer Schubachse des Schubgelenks (25) zu verschieben.

5. Kupplungsvorrichtung (1) nach Anspruch 4, **dadurch gekennzeichnet,**
**dass** die Kupplungsvorrichtung (1) mindestens einen Antrieb für das Schubgelenk aufweist.

6. Kupplungsvorrichtung (1) nach einem der vorangehenden Ansprüche,
**dadurch gekennzeichnet, dass** die Kupplungsvorrichtung (1) mindestens einen Antrieb für das Drehgelenk (9) aufweist.

7. Kupplungsvorrichtung (1) nach einem der vorangehenden Ansprüche,
**dadurch gekennzeichnet, dass** die Kupplungsvorrichtung (1)
- eine hintere Arretiervorrichtung (26) zum Blockieren von Drehbewegungen des Drehgelenks (9)
und/oder
- eine vordere Arretiervorrichtung (27) zum Blockieren von Drehbewegungen des Zwischenglieds (8) relativ zum Fahrzeug (2) umfasst.

8. System (4) zum Transportieren schwerer Transportgüter, umfassend mindestens eine Kupplungsvorrichtung (1) gemäß einem der vorangehenden Ansprüche und mindestens ein Fahrzeug (2), wobei das mindestens eine Fahrzeug (2) ein Kupplungselement aufweist, das zum Herstellen einer lösbaren Verbindung mit dem Kupplungsglied (5) der Kupplungsvorrichtung (1) ausgestaltet ist, wobei zumindest ein Fahrzeug (2) des mindestens einen Fahrzeugs des Systems vorzugsweise eine Zugmaschine, ein Flurförderzeug, ein Schwerlaststapler, ein Gabelstapler, ein RORO-Traktor oder eine Hafenzugmaschinen ist.

9. System (4) nach Anspruch 8, **dadurch gekennzeichnet, dass** das System (4) mindestens eine Ladeplattform (3) für schwere Transportgüter umfasst, wobei die mindestens eine Ladeplattform (3) ein Kupplungsmaul zum Aufnehmen des Kupplungsarms (6) der mindestens einen Kupplungsvorrichtung (1) umfasst, wobei zumindest eine Ladeplattform (3) der mindestens eine Ladeplattform (3) des Systems vorzugsweise ein Rolltrailer, ein Sattelauflieger, ein Containerchassis, ein Flachbettanhänger, ein Dolly-Anhänger oder eine mobile Laderampe ist.

10. System (4) gemäß einem der Ansprüche 8 oder 9, **dadurch gekennzeichnet, dass** das System (4) mindestens einen Kupplungsadapter (52)umfasst zum Herstellen einer lösbaren Verbindung zwischen dem Kupplungsarm (6) der Kupplungsvorrichtung (1) und einer als Sattelauflieger ausgestalteten Ladeplattform (3), wobei der Kupplungsadapter (52) ein Basisteil (53) umfasst, das auf einer Vorderseite des Basisteils (53) ein Kupplungsmaul (7) zum Aufnehmen des Kupplungsarms (6) der Kupplungsvorrichtung (1) aufweist, wobei auf einer Oberseite des Basisteils (53) eine Sattelplatte (51) mit einer Aufnahme (57) für einen Verbindungszapfen des Sattelaufliegers angeordnet ist.

11. System (4) gemäß einem der Ansprüche 8 bis 10, **dadurch gekennzeichnet, dass** mindestens eine der Ladeplattformen (3) einen straßentauglichen Radsatz (34) sowie einen schienentauglichen Radsatz (45) aufweist, wobei die Radsätze (34, 45) dieser Ladeplattform (3) relativ zueinander höhenverstellbar sind zur abwechselnden Nutzung der Radsätze (34, 45), wobei das System (4) mindestens einen schienengebundenen Güterwagen (39) umfasst, insbesondere einen Flachwagen, wobei auf einer Ladefläche des Güterwagens (39) Schienen (44) für den schienentauglichen Radsatz (45) der genannten Ladeplattform (3) angeordnet sind, wobei die Schienen (44) einen parallel zur Längsachse des Güterwagens (39) verlaufenden Abschnitt (46) und mindestens einen sich hieran anschließenden und in Richtung eines Seitenrandes der Ladefläche abbiegenden Abschnitt (47) aufweisen.

12. Verfahren zum Verwenden einer Kupplungsvorrichtung (1) nach einem der Ansprüche 1 bis 7 und zum Verwenden eines Systems (4) nach einem der Ansprüche 8 bis 11, **dadurch gekennzeichnet, dass** eine Ladeplattform (3) mittels der Kupplungsvorrichtung (1) bewegt wird und gleichzeitig der Kupplungsarm (6) mittels des Drehgelenks (9) der Kupplungsvorrichtung (1) gedreht wird.

13. Verfahren nach Anspruch 12, **dadurch gekennzeichnet, dass** während des Bewegens der Ladeplattform (3) das Zwischenglied (8) der Kupplungsvorrichtung (1) relativ zum Fahrzeug (2) drehfest arretiert ist zum Blockieren von Drehbewegungen des Zwischenglieds (8) relativ zum Fahrzeug (1).

14. Verfahren nach einem der Ansprüche 12 oder 13, **dadurch gekennzeichnet, dass** vor dem Einführen des Kupplungsarms (6) in das Kupplungsmaul der Ladeplattform (3) und/oder nach dem Herausziehen des Kupplungsarms (6) aus dem Kupplungsmaul der Ladeplattform (3) der Kupplungsarm (6) mittels des Drehgelenks (9) gedreht wird.

15. Verfahren nach einem der Ansprüche 12 bis 14, **dadurch gekennzeichnet, dass** der Kupplungsarm (6) mittels eines Schubgelenks des Zwischenglieds (8) entlang einer Längsachse des Kupplungsarms (6) verschoben wird und der Kupplungsarm (6) durch dieses Verschieben in das Kupplungsmaul der Ladeplattform (3) eingeführt oder aus dem Kupplungsmaul der Ladeplattform (3) herausgezogen wird.

## Claims

1. A coupling device (1) for producing a detachable connection between a vehicle (2) and a loading platform (3) for heavy transport goods, wherein the coupling device (1) comprises a coupling member (5) for connecting the coupling device (1) to the vehicle (2) and a coupling arm (6) for inserting the coupling arm (6) into a coupler head of the loading platform (3), wherein, in addition to an intermediate link, the coupling device (1) comprises an intermediate member (8) that is arranged between the coupling member (5) and the coupling arm (6), wherein the coupling device (1) comprises a rotary joint (9) that rotatably connects the coupling arm (6) to the intermediate member (8), wherein the rotary joint (9) has a vertical axis of rotation about which the coupling arm (6) may be rotated laterally relative to the intermediate member (8),
**characterized in that**
the coupling arm (6) is pivotable about the vertical axis of rotation, proceeding from a center orientation of the coupling arm (6), 90° into a first rotational direction and 90° into a second rotational direction opposing the first rotational direction.

2. The coupling device (1) according to claim 1, **characterized in that** the coupling arm (6) extends along a longitudinal axis of the coupling arm (6) from a front end piece of the coupling arm (6) facing the rotary joint (9) to a back end piece of the coupling arm (6) facing away from the rotary joint (9), wherein a first joint element of the rotary joint (9) is adjacent to the front end piece of the coupling arm (6) and is connected to the coupling arm (6) and a second joint element of the rotary element is adjacent to the intermediate member (8) and is connected to the intermediate member (8), wherein the first joint element and the second joint element of the rotary joint (9) are rotatable relative to one another about the vertical axis of rotation of the rotary joint (9).

3. The coupling device (1) according to any of the preceding claims, **characterized in that** the rotary joint (9) has a horizontal axis of rotation about which the coupling arm (6) may be pivoted upward and downward relative to the intermediate member (8).

4. The coupling device (1) according to any of the preceding claims, **characterized in that** the coupling device (1) additionally comprises a prismatic joint (25) that is embodied to displace the coupling arm (6) relative to the coupling member (5) along at least one displacement axis of the prismatic joint (25).

5. The coupling device (1) according to claim 4, **characterized in that** the coupling device (1) has at least one drive for the prismatic joint.

6. The coupling device (1) according to any of the preceding claims, **characterized in that** the coupling device (1) has at least one drive for the rotary joint (9).

7. The coupling device according to any of the preceding claims, **characterized in that** the coupling device (1) comprises
- a rear locking device (26) for blocking rotary movements of the rotary joint (9)
and/or
- a front locking device (27) for blocking rotary movements of the intermediate member (8) relative to the vehicle (2).

8. A system (4) for transporting heavy transport goods, comprising at least one coupling device (1) according to any of the preceding claims and at least one vehicle (2), wherein the at least one vehicle (2) has a coupling element that is designed for producing a detachable connection to the coupling member (5) of the coupling device (1), wherein at least one vehicle (2) of the at least one vehicle of the system is preferably a tractor, industrial truck, heavy-duty lift truck, fork lift, RORO tractor, or tractor container handler.

9. The system (4) according to claim 8, **characterized in that** the system (4) comprises at least one loading platform (3) for heavy transport goods, wherein the at least one loading platform (3) comprises a coupling head for receiving the coupling arm (6) of the at least one coupling device (1), wherein at least one loading platform (3) of the at least one loading platform (3) of the system is preferably a roller trailer, trailer, container chassis, flatbed trailer, dolly trailer, or mobile loading ramp.

10. The system (4) according to any of claims 8 or 9, **characterized in that** the system (4) comprises at least one coupling adapter (52) for producing a detachable connection between the coupling arm (6) of the coupling device (1) and a loading platform (3) embodied as a trailer, wherein the coupling adapter (52) comprises a base part (53) that has on a front side of the base part (53) a coupling head (7) for receiving the coupling arm (6) of the coupling device (1), wherein a saddle plate (51) having a receiving element (57) for a connection pin of the trailer is arranged on a top side of the base part (53).

11. The system (4) according to any of claims 8 through 10, **characterized in that** at least one of the loading platforms (3) has a road-worthy set of wheels (34) and a rail-worthy set of wheels (45), wherein the height of the sets of wheels (34, 45) of this loading platform (3) may be adjusted relative to one another for alternating usage of the sets of wheels (34, 45), wherein the system (4) comprises at least one rail-mounted freight car (39), in particular a flat-bed car, wherein rails (44) for the rail-worthy set of wheels (45) of the aforesaid loading platform (3) are arranged on a loading surface of the freight car (39), wherein the rails (44) have a segment (46) running parallel to the longitudinal axis of the freight car (39) and at least one segment (47) that connects thereto and curves towards a lateral edge of the loading surface.

12. A method for using a coupling device (1) according to any of claims 1 through 7 and for using a system (4) according to any of claims 8 through 11, **characterized in that** a loading platform (3) is moved by means of the coupling device (1) and the coupling arm (6) is simultaneously rotated by means of the rotary joint (9) of the coupling device (1).

13. The method according to claim 12, **characterized in that**, during the movement of the loading platform (3), the intermediate member (8) of the coupling device (1) is locked torque-proof relative to the vehicle (2) for blocking rotational movements of the intermediate member (8) relative to the vehicle (1).

14. The method according to either of claims 12 or 13, **characterized in that**, before the coupling arm (6) is introduced into the coupling head of the loading platform (3) and/or after the coupling arm (6) has been withdrawn from the coupling head, the loading platform (3) of the coupling arm (6) is rotated by means of the rotary joint (9).

15. The method according to any of claims 12 through 14, **characterized in that** the coupling arm (6) is displaced by means of a prismatic joint of the intermediate member (8) along a longitudinal axis of the coupling arm (6) and the coupling arm (6), due to this displacement, is introduced into the coupling head of the loading platform (3) or withdrawn from the coupling head of the loading platform (3).

## Revendications

1. Dispositif de couplage (1) destiné à établir une liaison amovible entre un véhicule (2) et une plateforme de chargement (3) pour des marchandises à transporter lourdes, où le dispositif de couplage (1) comprend un élément de couplage (5) pour relier le dispositif de couplage (1) avec le véhicule (2) et un bras de couplage (6) pour l'insertion du bras de couplage (6) dans une embouchure de couplage de la plateforme de chargement (3), où le dispositif de couplage (1) comprend en outre un élément intermédiaire (8), lequel est disposé entre l'élément de couplage (5) et le bras de couplage (6), où le dispositif de couplage (1) comprend un pivot (9), lequel relie le bras de couplage (6) de manière rotative avec l'élément intermédiaire (8),
où le pivot (9) présente un axe de rotation vertical, autour duquel le bras de couplage (6) peut pivoter latéralement par rapport à l'élément intermédiaire (8),
**caractérisé en ce**
**que** le bras de couplage (6) peut pivoter autour de l'axe de rotation vertical, en partant d'une orientation centrale du bras de couplage (6), de 90° dans une première direction de rotation, et de 90° dans une deuxième direction de rotation, opposée à la première direction de rotation.

2. Dispositif de couplage (1) selon la revendication 1, **caractérisé en ce que** le bras de couplage (6) s'étend le long d'un axe longitudinal du bras de couplage (6) à partir d'une pièce d'extrémité avant du bras de couplage (6), orientée vers le pivot (9), jusqu'à une pièce d'extrémité arrière du bras de couplage (6), opposée au pivot (9), où un premier élément d'articulation du pivot (9) est limitrophe avec la pièce d'extrémité avant du bras de couplage (6) et est relié avec le bras de couplage (6), et un deuxième élément d'articulation du pivot est limitrophe avec l'élément intermédiaire (8) et est relié avec l'élément intermédiaire (8), où le premier élément d'articulation et le deuxième élément d'articulation du pivot (9) sont rotatifs l'un par rapport à l'autre autour de l'axe de rotation vertical du pivot (9).

3. Dispositif de couplage (1) selon l'une des revendications précédentes,
caractérisé en ce le pivot (9) présente un axe de rotation horizontal, autour duquel le bras de couplage (6) peut pivoter vers le haut et vers le bas par rapport à l'élément intermédiaire (8).

4. Dispositif de couplage (1) selon l'une des revendications précédentes,
**caractérisé en ce que** le dispositif de couplage (1) comprend en outre un joint à glissière (25), qui est conçu pour déplacer le bras de couplage (6) par rapport à l'élément de couplage (5) le long d'au moins un axe de déplacement du joint à glissière (25).

5. Dispositif de couplage (1) selon la revendication 4, **caractérisé en ce que** le dispositif de couplage (1) présente au moins un entraînement pour le joint à glissière.

6. Dispositif de couplage (1) selon l'une des revendications précédentes,
**caractérisé en ce que** le dispositif de couplage (1) présente au moins un entraînement pour le pivot (9).

7. Dispositif de couplage (1) selon l'une des revendications précédentes,
**caractérisé en ce que** le dispositif de couplage (1) comprend
- un dispositif de butée arrière (26) pour le blocage de mouvements de rotation du pivot (9)
et/ou
- un dispositif de butée avant (27) pour le blocage de mouvements de rotation de l'élément intermédiaire (8) par rapport au véhicule (2).

8. Système (4) destiné au transport de marchandises à transporter lourdes, comprenant au moins un dispositif de couplage (1) selon l'une des revendications précédentes et au moins un véhicule (2), où l'au moins un véhicule (2) présente un élément de couplage, qui est conçu pour l'établissement d'une liaison amovible avec l'élément de couplage (5) du dispositif de couplage (1), où au moins un véhicule (2) de l'au moins un véhicules du système est de préférence un tracteur, un véhicule industriel, un chariot élévateur pour charges lourdes, un chariot élévateur à fourche, un tracteur RORO ou un tracteur portuaire.

9. Système (4) selon la revendication 8, **caractérisé en ce que** le système (4) comprend au moins une plateforme de chargement (3) pour des marchandises à transporter lourdes, où l'au moins une plateforme de chargement (3) comprend une embouchure de couplage pour la réception du bras de couplage (6) de l'au moins un dispositif de couplage (1), où au moins une plateforme de chargement (3) parmi l'au moins une plateforme de chargement (3) du système est de préférence un semi-remorque de conteneurs, un semi-remorque, un châssis pour conteneurs, une remorque à lit plat, une remorque Dolly ou une rampe de chargement mobile.

10. Système (4) selon l'une des revendications 8 ou 9, **caractérisé en ce que** le système (4) comprend au moins un adaptateur d'attelage (52) pour l'établissement d'une liaison amovible entre le bras de couplage (6) du dispositif de couplage (1) et une plateforme de chargement (3) conçue sous la forme d'une semi-remorque, où l'adaptateur d'attelage (52) comprend une partie de base (53), qui présente sur une face avant de la partie de base (53) une embouchure de couplage (7) pour la réception du bras de couplage (6) du dispositif de couplage (1), où, sur une face supérieure de la partie de base (53) est disposée une plaque d'attelage (51) avec un logement (57) pour une broche de connexion du semi-remorque.

11. Système (4) selon l'une des revendications 8 à 10, **caractérisé en ce qu'**au moins l'une des plateformes de chargement (3) présente un train de roues (34) approprié pour les routes ainsi qu'un train de roues (45) approprié pour les rails, où les trains de roues (34, 45) de cette plateforme de chargement (3) sont réglables en hauteur l'un par rapport à l'autre pour l'utilisation des trains de roues (34, 45) en alternance, où le système (4) comprend au moins un wagon à marchandises relié à des rails (39), notamment un wagon plat, où des rails (44) pour les trains de roues (45) appropriés pour les rails de ladite plateforme de chargement (3) sont disposés sur la surface de chargement du wagon à marchandises (39), où les rails (44) présentent une portion (46) s'étendant parallèlement par rapport à l'axe longitudinal du wagon à marchandises (39) et au moins une section (47) faisant suite à ce niveau et se recourbant en direction d'un bord latéral de la surface de chargement.

12. Procédé d'utilisation d'un dispositif de couplage (1) selon l'une des revendications 1 à 7 et d'utilisation d'un système (4) selon l'une des revendications 8 à 11, **caractérisé en ce qu'**une plateforme de chargement (3) est déplacée au moyen du dispositif de couplage (1) et que le bras de couplage (6) est simultanément mis en rotation au moyen du pivot (9) du dispositif de couplage (1).

13. Procédé selon la revendication 12, **caractérisé en ce que**, pendant le mouvement de la plateforme de chargement (3), l'élément intermédiaire (8) du dispositif de couplage (1) est mis en butée sans pouvoir tourner par rapport au véhicule (2) pour le blocage de mouvements de rotation de l'élément intermédiaire (8) par rapport au véhicule (1).

14. Procédé selon l'une des revendications 12 ou 13, **caractérisé en ce qu'**avant l'insertion du bras de couplage (6) dans l'embouchure de couplage de la plateforme de chargement (3) et/ou après le retrait du bras de couplage (6) hors de l'embouchure de couplage de la plateforme de chargement (3), le bras de couplage (6) est mis en rotation au moyen du pivot (9).

15. Procédé selon l'une des revendications 12 à 14, **caractérisé en ce que** le bras de couplage (6) est déplacé au moyen d'un joint à glissières de l'élément intermédiaire (8) le long d'un axe longitudinal du bras de couplage (6) et le bras de couplage (6) est inséré par ce déplacement dans l'embouchure de couplage de la plateforme de chargement (3) ou est retiré de l'embouchure de couplage de la plateforme de chargement (3).
